(19) Europäisches Patentamt European Patent Office Office européen des brevets

(11) **EP 4 202 921 B1**

(12) **EUROPEAN PATENT SPECIFICATION**

(45) Date of publication and mention of the grant of the patent:
**08.04.2026 Bulletin 2026/15**

(21) Application number: **21872961.4**

(22) Date of filing: **24.09.2021**

(51) International Patent Classification (IPC):
$G10L\ 19/008^{(2013.01)}$   $G10L\ 19/02^{(2013.01)}$
$G10L\ 25/15^{(2013.01)}$   $G06N\ 20/00^{(2019.01)}$
$G06N\ 3/0455^{(2023.01)}$   $G06N\ 3/088^{(2023.01)}$

(52) Cooperative Patent Classification (CPC):
**G10L 19/008; G06N 3/0455; G06N 3/088;**
G06N 3/0464; G10L 19/02

(86) International application number:
**PCT/KR2021/013071**

(87) International publication number:
**WO 2022/065933 (31.03.2022 Gazette 2022/13)**

(54) **AUDIO ENCODING APPARATUS AND AUDIO DECODING APPARATUS**

AUDIOCODIERUNGSVORRICHTUNG SOWIE AUDIODECODIERUNGSVORRICHTUNG

APPAREIL DE CODAGE AUDIO ET APPAREIL DE DÉCODAGE AUDIO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2020 KR 20200126360**
**21.12.2020 KR 20200179918**

(43) Date of publication of application:
**28.06.2023 Bulletin 2023/26**

(73) Proprietor: **Samsung Electronics Co., Ltd.**
**Suwon-si, Gyeonggi-do 16677 (KR)**

(72) Inventors:
• **NAM, Woohyun**
**Suwon-si, Gyeonggi-do 16677 (KR)**
• **SON, Yoonjae**
**Suwon-si, Gyeonggi-do 16677 (KR)**
• **CHUNG, Hyunkwon**
**Suwon-si, Gyeonggi-do 16677 (KR)**
• **HWANG, Sunghee**
**Suwon-si, Gyeonggi-do 16677 (KR)**

(74) Representative: **Appleyard Lees IP LLP**
**G Mill**
**Dean Clough Industrial Park**
**Halifax HX3 5AH (GB)**

(56) References cited:
WO-A1-2020/010072    KR-A- 20190 069 192
KR-A- 20190 069 198    KR-A- 20190 072 653
KR-A- 20200 013 091    KR-A- 20200 086 064
US-A1- 2016 142 845    US-A1- 2019 180 142
US-A1- 2020 221 242    US-B1- 8 041 041

• **BIN CHENG ET AL: "A Spatial Squeezing approach to Ambisonic audio compression", ACOUSTICS, SPEECH AND SIGNAL PROCESSING, 2008. ICASSP 2008. IEEE INTERNATIONAL CONFERENCE ON, IEEE, PISCATAWAY, NJ, USA, 31 March 2008 (2008-03-31), pages 369 - 372, XP031250565, ISBN: 978-1-4244-1483-3**

## Description

### Technical Field

The present disclosure relates to the field of audio encoding and decoding. More particularly, the present disclosure relates to the field of encoding and decoding audio including a plurality of channels based on artificial intelligence (AI).

### Background Art

Audio is encoded by a codec conforming to a certain compression standard, for example, the Advanced Audio Coding (AAD) standard, the OPUS standard, etc., and then is stored in a recording medium or transmitted via a communication channel in the form of a bitstream.

In general, as a general-purpose codec does not support encoding/decoding of multi-channel audio providing a spatial three-dimensional effect to a listener, there is a demand for a method of encoding/decoding multi-channel audio at a low bitrate by using the general-purpose codec.

Background information can be found in US8041041, which discloses a system for generating stereo-channel audio signals using a surround mapping unit to receive signals from audio channels and to generate a pair of stereo-channel audio signals based on the audio channel. Further background information can be found in US2020/221242, which discloses a converter configured to convert a frequency of an input stereo audio signal.

### Technical Problem

A technical objective of the present techniques is to encode/decode multi-channel audio by using a general-purpose codec supporting encoding/decoding of few-channel audio.

Also, a technical objective of the present techniques is to encode multi-channel audio at a low bitrate, and to reconstruct the multi-channel audio with a high quality.

### Technical Solution

According to the present techniques, there is provided an audio signal processing apparatus for audio encoding, as set out in appended independent claim 1.

According to the present techniques, there is provided an audio signal processing apparatus for audio decoding, as set out in appended independent claim 12.

### Advantageous Effects

Multi-channel audio may be encoded/decoded by using a general-purpose codec supporting encoding/decoding of few-channel audio.

Also, multi-channel audio may be encoded at a low bitrate and may be reconstructed with a high quality.

However, effects that are obtainable from an audio encoding apparatus and method and an audio decoding apparatus and method are not limited to the aforementioned effect, and other unstated effects will be clearly understood by one of ordinary skill in the art in view of descriptions below.

### Description of Drawings

Brief descriptions about respective drawings are provided to gain a sufficient understanding of the drawings of the present specification.

FIG. 1 illustrates a procedure for encoding and decoding audio.
FIG. 2 illustrates a block diagram of a configuration of an audio encoding apparatus.
FIG. 3 illustrates an example of signals included in a high order ambisonic signal.
FIG. 4 illustrates a first deep neural network (DNN).
FIG. 5 illustrates comparison between a first audio signal of a frequency domain and a frequency feature signal shown in FIG. 4.
FIG. 6 illustrates a second DNN.
FIG. 7 illustrates a method of combining an audio feature signal with a frequency feature signal.
FIG. 8 illustrates a method of combining an audio feature signal with a frequency feature signal.

FIG. 9 illustrates a block diagram of a configuration of an audio decoding apparatus.

FIG. 10 illustrates a third DNN.

FIG. 11 illustrates a fourth DNN.

FIG. 12 illustrates a method of training a first DNN, a second DNN, a third DNN and a fourth DNN.

FIG. 13 illustrates a flowchart for describing a procedure for training, by a training apparatus, a first DNN, a second DNN, a third DNN and a fourth DNN.

FIG. 14 illustrates a flowchart for describing a procedure for training, by a training apparatus, a first DNN, a second DNN, a third DNN and a fourth DNN.

FIG. 15 illustrates another method of training a first DNN, a second DNN, a third DNN and a fourth DNN.

FIG. 16 illustrates a flowchart for describing another procedure for training, by a training apparatus, a first DNN, a second DNN, a third DNN and a fourth DNN.

FIG. 17 illustrates a flowchart for describing another procedure for training, by a training apparatus, a first DNN, a second DNN, a third DNN and a fourth DNN.

FIG. 18 illustrates a flowchart for describing an audio encoding method.

FIG. 19 illustrates a flowchart for describing an audio decoding method.

**Mode for Invention**

As the present disclosure allows for various changes and numerous embodiments, particular embodiments will be illustrated in the drawings and described in detail in the written description. However, this is not intended to limit the present disclosure to the particular embodiments, and it will be understood that all changes, and substitutes that do not depart from the technical scope of the present disclosure are encompassed in the embodiments of the present disclosure.

In the description of embodiments, certain detailed explanations of the related art are omitted when it is deemed that they may unnecessarily obscure the essence of the present disclosure. Also, numbers (for example, a first, a second, and the like) used in the description of the embodiments are merely identifier codes for distinguishing one element from another.

Also, in the present specification, it will be understood that when elements are "connected" or "coupled" to each other, the elements may be directly connected or coupled to each other, but may alternatively be connected or coupled to each other with an intervening element therebetween, unless specified otherwise.

In the present specification, regarding an element represented as a "-er (or)", "unit", or a "module", two or more elements may be combined into one element or one element may be divided into two or more elements according to subdivided functions. In addition, each element described hereinafter may additionally perform some or all of functions performed by another element, in addition to main functions of itself, and some of the main functions of each element may be performed entirely by another element.

Also, in the present specification, a "deep neural network (DNN)" is a representative example of an artificial neural network model simulating brain nerves, and is not limited to an artificial neural network model using a specific algorithm.

Also, in the present specification, a "parameter" is a value used in an operation procedure of each layer forming a neural network, and for example, may include a weight used when an input value is applied to a certain operation expression. The parameter may be expressed in a matrix form. The parameter is a value set as a result of training, and may be updated via separate training data when necessary.

Also, in the present specification, a "first audio signal" indicates audio to be audio-encoded, and a "second audio signal" indicates audio obtained as a result of artificial intelligence (AI) encoding performed on the first audio signal. Also, a "third audio signal" indicates audio obtained via first decoding in an audio decoding procedure, and a "fourth audio signal" indicates audio obtained as a result of AI encoding performed on the third audio signal.

Also, in the present specification, a "first DNN" indicates a DNN used to obtain a frequency feature signal of a first audio signal, and a "second DNN" indicates a DNN used to AI-downscale the first audio signal. Also, a "third DNN" indicates a DNN used to obtain a weight signal from the frequency feature signal, and a "fourth DNN" indicates a DNN used to AI-upscale the third audio signal.

Also, in the present specification, "AI-downscaling" indicates AI-based processing for decreasing the number of channels of audio, and "first encoding" indicates encoding processing via an audio compression method based on frequency transformation. Also, "first decoding" indicates decoding processing via an audio reconstruction method based on frequency transformation, and "AI-upscaling" indicates AI-based processing for increasing the number of channels of audio.

Hereinafter, embodiments according to the technical concept of the present disclosure will now be sequentially described.

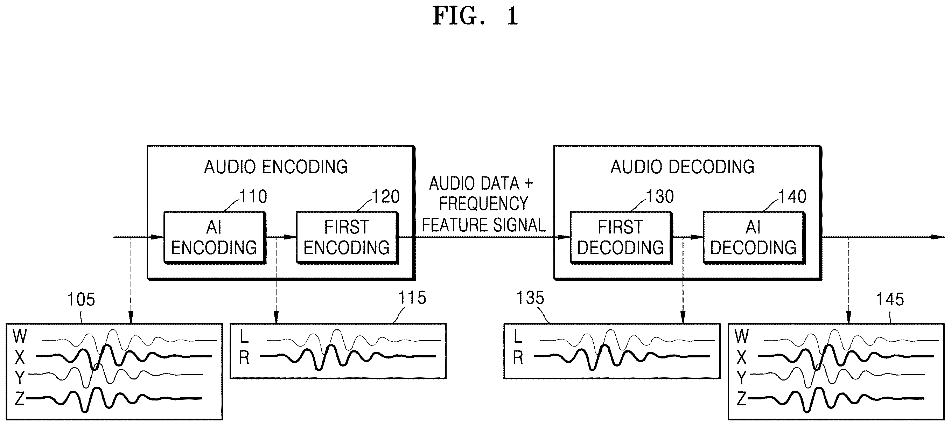

FIG. 1 illustrates a procedure for encoding and decoding audio according to an embodiment.

As described above, due to an increase in the number of channels of an audio signal, a processing amount of information for encoding/decoding is increased, such that there is a demand for a scheme for improving efficiency in encoding and decoding of an audio signal.

As illustrated in FIG. 1, in an audio encoding procedure, a first audio signal 105 including a plurality of channels is AI-encoded (110) to obtain a second audio signal 115 including a small number of channels. The first audio signal 105 may be ambisonic audio including a W channel, an X channel, a Y channel, and a Z channel, and the second audio signal 115 may be stereo-audio including a left (L) channel and a right (R) channel or mono-audio including 1 channel. In an embodiment, the first audio signal 105 may be 5-channel audio, 6-channel audio, 9-channel audio, or the like, which has channels more than 1 channel. In the present disclosure, au audio signal such as the first audio signal 105 and a fourth audio signal 145, which has a large number of channels, may be referred to as a multi-channel audio signal, and an audio signal such as the second audio signal 115 and a third audio signal 135, which has a small number of channels, may be referred to as a few-channel audio signal. The number of channels of the few-channel audio signal may be smaller than the number of channels included in the multi-channel audio signal.

In the present disclosure, first encoding (120) and first decoding (130) are performed on the second audio signal 115 having a small number of channels compared to the first audio signal 105, such that encoding/decoding of the first audio signal 105 is possible even by using a codec not supporting encoding/decoding of the multi-channel audio signal.

Describing in detail with reference to FIG. 1, in an audio encoding procedure, the first audio signal 105 including n channels is AI-encoded (110) to obtain the second audio signal 115 including m channels, and the second audio signal 115 is first encoded (120). In an embodiment, n and m are natural numbers, where m is smaller than n. In another embodiment, n and m may be rational numbers.

In an audio decoding procedure, audio data obtained as a result of the AI-encoding (110) is received, the third audio signal 135 with m channels is obtained via first decoding (130), and the fourth audio signal 145 with n channels is obtained by AI-decoding (140) the third audio signal 135.

In a procedure of AI-encoding (110), when the first audio signal 105 is input, the first audio signal 105 is AI-downscaled to obtain the second audio signal 115 with few channels. In a procedure of AI-decoding (140), when the third audio signal 135 is input, the third audio signal 135 is AI-upscaled to obtain the fourth audio signal 145. That is, as the number of channels of the first audio signal 105 is decreased via AI-encoding (110) and the number of channels of the third audio signal 135 is increased via AI-decoding (140), there is a need to minimize a difference between the first audio signal 105 and the fourth audio signal 145 due to a change in the number of channels.

A frequency feature signal is used to compensate for the change in the number of channels which occurs in the procedure of AI-encoding (110) and the procedure of AI-decoding (140). The frequency feature signal represents a correlation between channels of the first audio signal 105, and in the procedure of AI-decoding (140), the fourth audio signal 145 being equal/similar to the first audio signal 105 may be reconstructed based on the frequency feature signal.

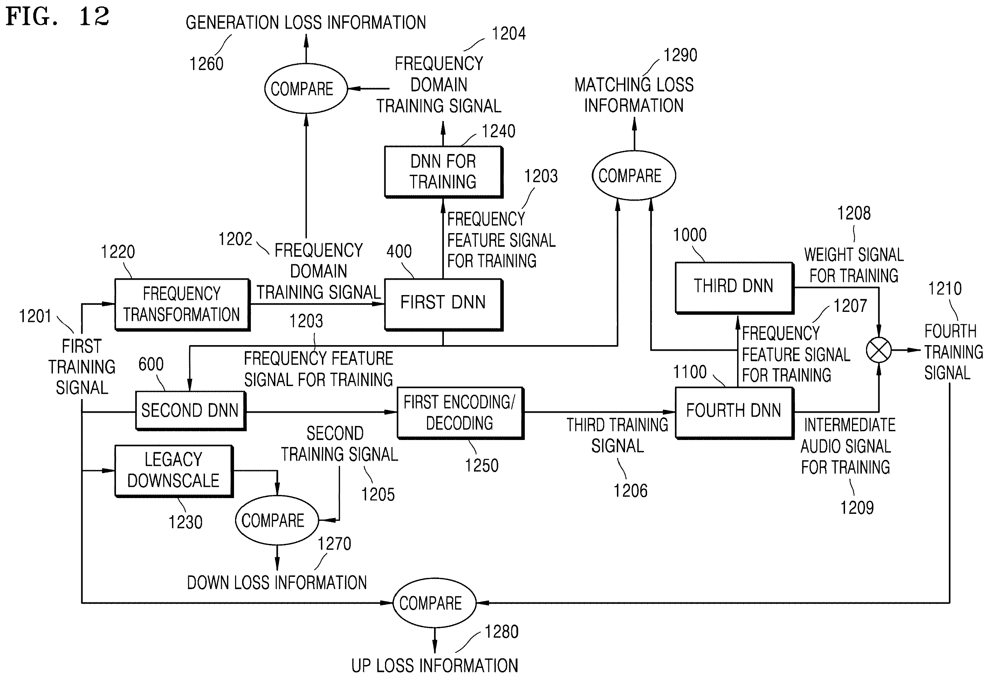

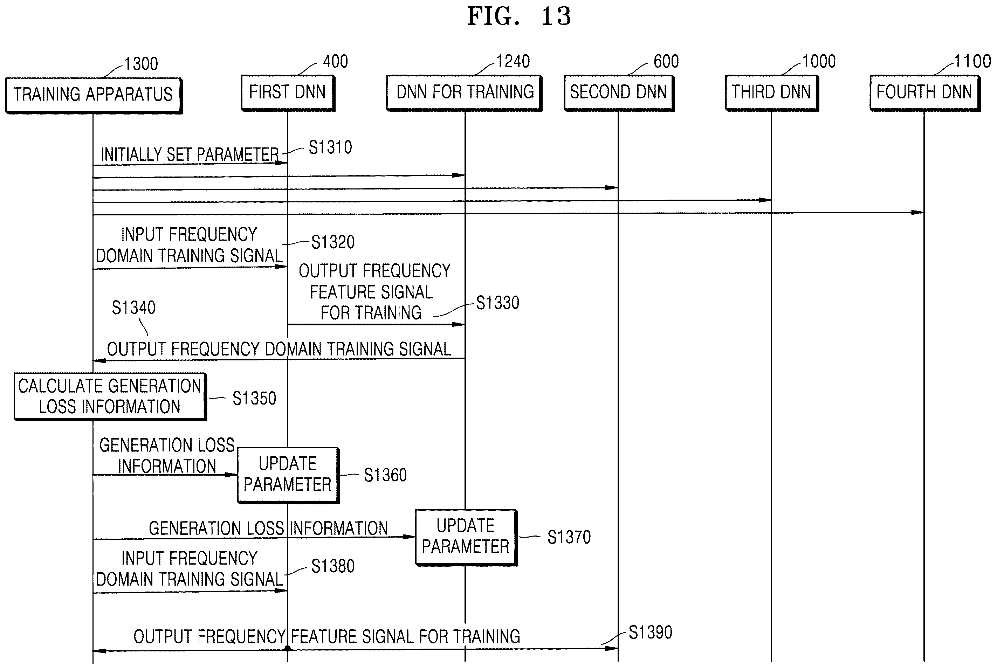

AI for AI-encoding (110) and AI-decoding (140) may be implemented as a DNN. As will be described below with reference to FIG. 12, DNNs for AI-encoding (110) and AI-decoding (140) are jointly trained via sharing of loss information, a difference between the first audio signal 105 and the fourth audio signal 145 may be minimized.

Describing in detail first encoding (120) and first decoding (130) shown in FIG. 1, an information amount of the second audio signal 115 AI-downscaled from the first audio signal 105 may be decreased via first encoding (120). First encoding (120) may include a procedure for transforming the second audio signal 115 into a frequency domain, a procedure for quantizing a signal that has been transformed into the frequency domain, a procedure for entropy-encoding the quantized signal, and the like. The procedure of first encoding (120) may be implemented by using one of audio signal compression methods based on frequency transformation using the Advanced Audio Coding (AAD) standard, the OPUS standard, etc.

The third audio signal 135 corresponding to the second audio signal 115 may be reconstructed via first decoding (130) of the audio data. First decoding (130) may include a procedure for generating a quantized signal by entropy-decoding the audio data, a procedure for inverse-quantizing the quantized signal, and a procedure for transforming a signal of a frequency domain into a signal of a time domain. The procedure of first decoding (130) may be implemented by using one of audio signal reconstruction methods corresponding to the audio signal compression methods which are based on frequency transformation using the AAC standard, the OPUS standard, etc. and are used in the procedure of first encoding (120).

The audio data obtained via the audio encoding procedure may include the frequency feature signal. As described above, the frequency feature signal is used to reconstruct the fourth audio signal 145 that is equal/similar to the first audio signal 105.

The audio data may be transmitted in the form of a bitstream. The audio data may include data obtained based on sample values in the second audio signal 115, e.g., quantized sample values of the second audio signal 115. Also, the audio data may include a plurality of pieces of information used in the procedure of first encoding (120), for example, prediction mode information, quantization parameter information, or the like. The audio data may be generated according to a rule, for example, syntax, of an audio signal compression method that is used from among the audio signal compression methods based on frequency transformation using the AAD standard, the OPUS standard, etc.

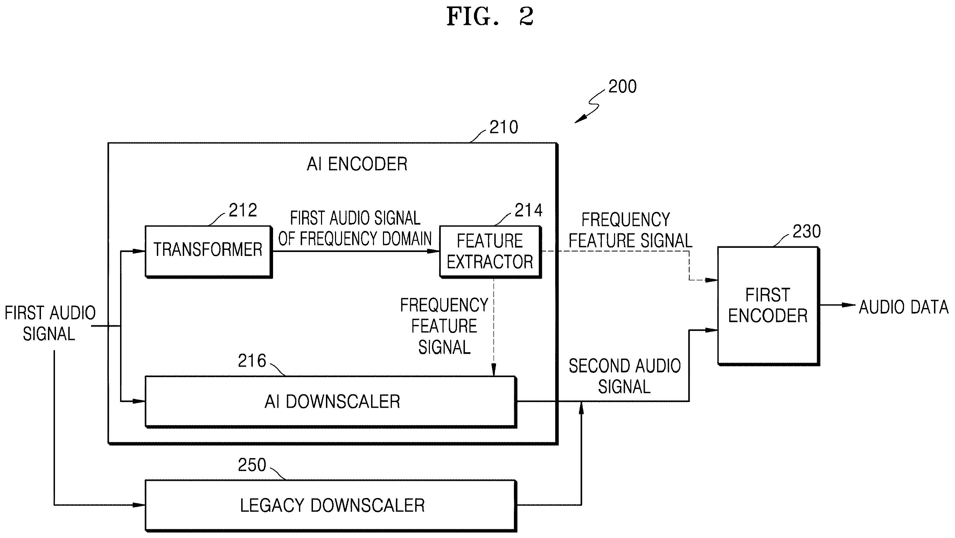

FIG. 2 illustrates a block diagram of a configuration of an encoding apparatus 200 (or an audio encoding apparatus).

Referring to FIG. 2, the encoding apparatus 200 may include an AI encoder 210 and a first encoder 230. The AI encoder 210 may include a transformer 212, a feature extractor 214 and an AI downscaler 216. As illustrated in FIG. 2, the encoding apparatus 200 may further include a legacy downscaler 250.

While FIG. 2 illustrates the AI encoder 210, the first encoder 230, and the legacy downscaler 250 as individual elements, the AI encoder 210, the first encoder 230, and the legacy downscaler 250 may be implemented by one processor. In this case, they may be implemented as a dedicated processor or may be implemented as a combination of software and a general-purpose processor, such as an application processor (AP), a central processing unit (CPU), or a graphics processing unit (GPU). The dedicated processor may include a memory for implementing the present disclosure or may include a memory processor for using an external memory.

The AI encoder 210, the first encoder 230, and the legacy downscaler 250 may be configured by a plurality of processors. In this case, they may be implemented as a combination of dedicated processors or a combination of software and a plurality of general-purpose processors such as AP, CPU or GPU. The transformer 212, the feature extractor 214 and the AI downscaler 216 may be implemented by different processors.

The AI encoder 210 obtains a frequency feature signal and the second audio signal 115 including m channels from the first audio signal 105 including n channels. In an embodiment, n and m are natural numbers, where m is smaller than n. In another embodiment, n and m may be rational numbers.

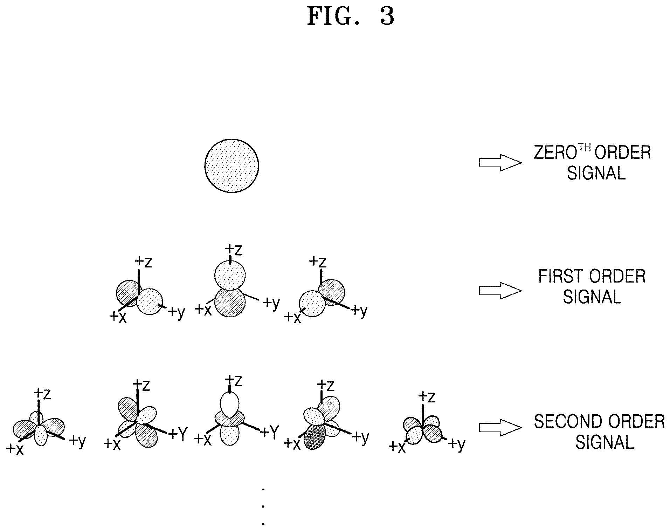

The first audio signal 105 may be a high order ambisonic signal including n channels. In more detail, the first audio signal 105 may be a high order ambisonic signal including a zero$^{th}$ order signal and a plurality of first order signals. The high order ambisonic signal will now be described with reference to FIG. 3.

FIG. 3 illustrates an example of signals included in a high order ambisonic signal.

The high order ambisonic signal may include a zero$^{th}$ order signal corresponding to a W channel, a first order signal corresponding to an X channel, a Y channel, and a Z channel, and a second order signal corresponding to an R channel, an S channel, or the like. Although not illustrated in FIG. 3, the high order ambisonic signal may further include a third order signal, a fourth order signal, or the like.

The first audio signal 105 may include the zero$^{th}$ order signal corresponding to the W channel, and a signal (e.g., first order signals corresponding to the X channel, the Y channel, and the Z channel) that is a higher order signal than the zero$^{th}$ order signal. The first audio signal 105 may include a first order signal and signals that are higher order signals than the first order signal.

The second audio signal 115 may be one of a stereo signal and a mono signal.

Referring back to FIG. 2, the second audio signal 115 may be output to the first encoder 230, and the frequency feature signal may be output from the feature extractor 214 to the AI downscaler 216 or to the first encoder 230.

The AI encoder 210 may obtain the frequency feature signal and the second audio signal 115, based on AI. Here, the AI may indicate processing by a DNN. In detail, the AI encoder 210 may obtain the frequency feature signal by using a first DNN, and may obtain the second audio signal 115 by using a second DNN.

The AI encoder 210 performs AI-downscaling for decreasing the number of channels of the first audio signal 105, and obtains the frequency feature signal indicating a feature of each channel of the first audio signal 105. The second audio signal 115 and the frequency feature signal may be signaled to a decoding apparatus 900 (or an audio decoding apparatus) via predetermined processing, and the decoding apparatus 900 may reconstruct, by using the frequency feature signal, the fourth audio signal 145 being equal/similar to the first audio signal 105.

Describing in detail the AI encoder 210, the transformer 212 transforms the first audio signal 105 from a time domain into a frequency domain, and thus, obtains a first audio signal of the frequency domain. The transformer 212 may transform the first audio signal 105 into the first audio signal of the frequency domain, according to various transformation methods including a short time Fourier transform (STFT), or the like.

The first audio signal 105 includes samples identified according to a channel and a time, and the first audio signal of the frequency domain includes samples identified according to a channel, a time, and a frequency bin. Here, the frequency bin indicates a frequency index indicating to which frequency (or frequency band) a value of each sample corresponds.

The feature extractor 214 obtains the frequency feature signal from the first audio signal of the frequency domain via the first DNN. As described above, the frequency feature signal indicates a correlation between the channels of the first audio signal 105, and the decoding apparatus 900 to be described below may obtain, by using the frequency feature signal, the fourth audio signal 145 being equal/similar to the first audio signal 105.

The feature extractor 214 obtains the frequency feature signal having a smaller number of samples than the first audio signal of the frequency domain. The reason of obtaining the frequency feature signal is to compensate for a signal loss due to the change in the number of channels according to AI-downscaling, to facilitate encoding by the first encoder 230, and to decrease the number of bits of audio data. The correlation between the channels of the first audio signal 105 may be detected from the first audio signal of the frequency domain, but because the first audio signal of the frequency domain has n channels as the first audio signal 105, the first audio signal of the frequency domain is not to be first encoded but increases, due to its large size, the number of bits of the audio data. Therefore, the feature extractor 214 may obtain the frequency feature signal having a smaller number of samples than the first audio signal of the frequency domain, and thus, may simultaneously decrease the number of bits of the audio data and signal the correlation between the channels of the first audio signal 105 to the decoding apparatus 900.

The AI downscaler 216 obtains the second audio signal 115 by processing the first audio signal 105 via the second DNN. The number of channels of the second audio signal 115 may be smaller than the number of channels of the first audio signal 105. As described above, the first encoder 230 does not support encoding of the first audio signal 105 but may support encoding of the second audio signal 115.

The first audio signal 105 may be 4-channel ambisonic audio, and the second audio signal 115 may be stereo audio, but the number of channels of the first audio signal 105 and the second audio signal 115 is not limited to 4 channels and 2 channels, respectively.

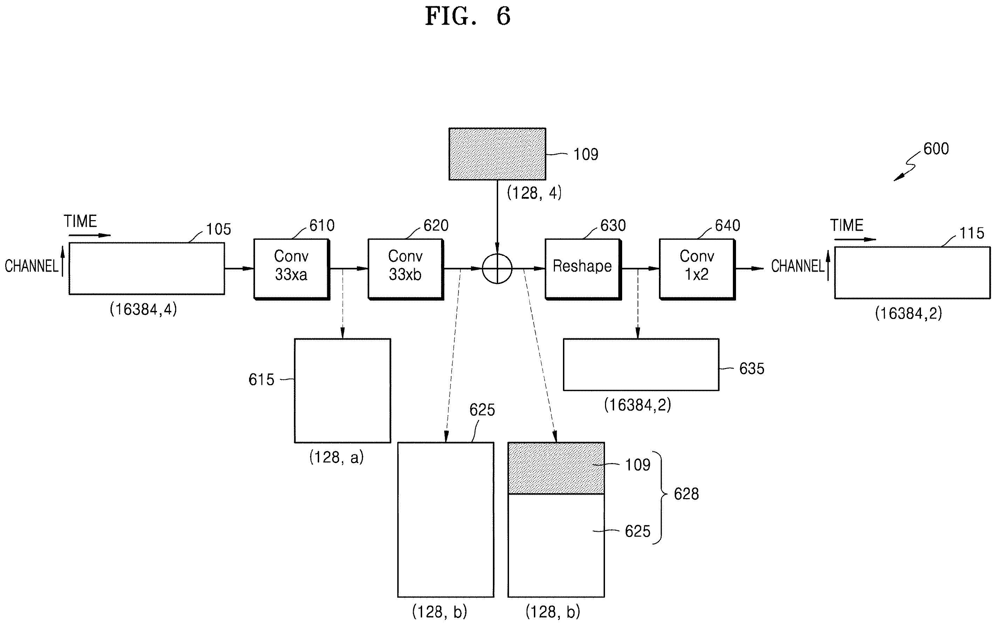

When the frequency feature signal obtained by the feature extractor 214 is output to the AI downscaler 216, the AI downscaler 216 embeds the frequency feature signal during the first audio signal 105 being processed via the second DNN. A procedure for embedding the frequency feature signal will be described below with reference to FIGS. 6 to 8.

The first encoder 230 may first encode the second audio signal 115 output from the AI downscaler 216, and thus, may decrease an information amount of the second audio signal 115. As a result of the first encoding by the first encoder 230, audio data may be obtained. The audio data may be represented in the form of a bitstream, and may be transmitted to the decoding apparatus 900 via a network. The audio data may be referenced as an output audio signal.

When the frequency feature signal is output from the feature extractor 214 to the first encoder 230, the first encoder 230 first encodes the frequency feature signal with the second audio signal 115. The frequency feature signal may have n channels as the first audio signal 105, and thus, may be included in a supplemental region of a bitstream which corresponds to the audio data, instead of an encoding method based on frequency transformation. For example, the frequency feature signal may be included in a payload region or a user-defined region of the audio data.

As illustrated in FIG. 2, the encoding apparatus 200 may further include the legacy downscaler 250, and the legacy downscaler 250 obtains a few-channel audio signal by downscaling the first audio signal 105. For example, the few-channel audio signal may have m channels, as the second audio signal 115.

The few-channel audio signal may be combined to an audio signal output from the AI downscaler 216, and the second audio signal 115 obtained as a result of the combination may be input to the first encoder 230.

The legacy downscaler 250 may obtain the few-channel audio signal by using at least one algorithm from among various algorithms for decreasing the number of channels of the first audio signal 105.

For example, when the first audio signal 105 is 4-channel audio including a W channel signal, an X channel signal, a Y channel signal, and a Z channel signal, two or more signals from among the W channel signal, the X channel signal, the Y channel signal, and the Z channel signal may be combined to obtain the few-channel audio signal. Here, the W channel signal may indicate a sum of strengths of sound sources in all directions, the X channel signal may indicate a difference between strengths of front and rear sound sources, the Y channel signal may indicate a difference between strengths of left and right sound sources, and the Z channel signal may indicate a difference between strengths of up and down sound sources. When the second audio signal 115 is stereo audio, the legacy downscaler 250 may obtain, as a left (L) signal, a signal obtained by subtracting the Y channel signal from the W channel signal, and may obtain, as a right (R) signal, a signal obtained by summing the W channel signal and the Y channel signal. As another example, the legacy downscaler 250 may obtain the few-channel audio signal via UHJ encoding.

The few-channel audio signal corresponds to a prediction version of the second audio signal 115, and the audio signal output from the AI downscaler 216 corresponds to a residual version of the second audio signal 115. That is, the few-channel audio signal corresponding to the prediction version of the second audio signal 115 is combined in the form of skip connection with the audio signal output from the AI downscaler 216, such that the number of layers of the second DNN may be decreased.

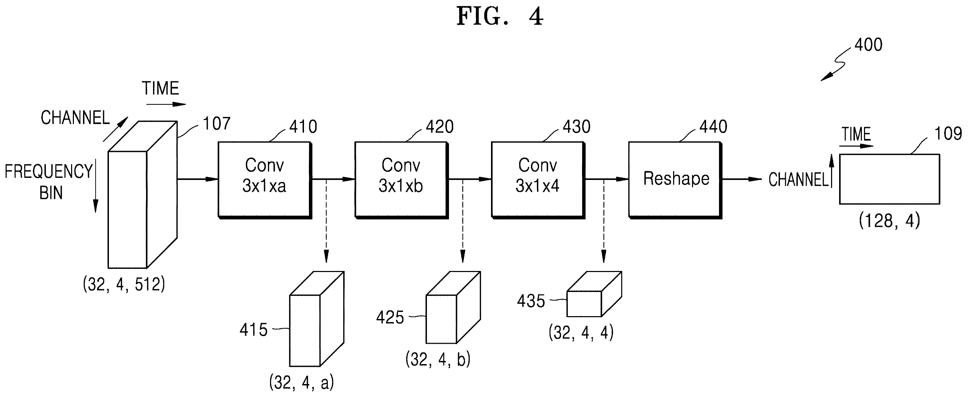

Hereinafter, the first DNN for extracting a frequency feature signal and the second DNN for AI-downscaling the first audio signal 105 will be described with reference to FIGS. 4 to 8.

FIG. 4 illustrates a first DNN 400.

The first DNN 400 may include at least one convolution layer and at least one reshape layer.

The convolution layer obtains feature data by processing input data via a filter with a predetermined size. Parameters of the filter of the convolution layer may be optimized via a training procedure to be described below.

The reshape layer changes a size of input data by changing locations of samples of the input data.

Referring to FIG. 4, a first audio signal 107 of a frequency domain is input to the first DNN 400. The first audio signal 107 of the frequency domain includes samples identified according to a channel, a time, and a frequency bin. That is, the first audio signal 107 of the frequency domain may be three-dimensional data of the samples. Each sample of the first audio signal 107 of the frequency domain may be a frequency coefficient obtained as a result of frequency transformation.

FIG. 4 illustrates that a size of the first audio signal 107 of the frequency domain is (32, 4, 512), which means that a time length of the first audio signal 107 of the frequency domain is 32, the number of channels is 4, and the number of frequency bins is 512. 32 as the time length means that the number of frames is 32, and each frame corresponds to a predetermined time period (e.g., 5 ms). That the size of the first audio signal 107 of the frequency domain is (32, 4, 512) is merely an example, and the size of the first audio signal 107 of the frequency domain or a size of an input/output signal of each layer may be variously changed.

A first convolution layer 410 processes the first audio signal 107 of the frequency domain via a filters, each having 3x1 size. As a result of the processing by the first convolution layer 410, a feature signal 415 with a size of (32, 4, a) may be obtained.

A second convolution layer 420 processes an input signal via b filters, each having 3x1 size. As a result of the processing by the second convolution layer 420, a feature signal 425 with a size of (32, 4, b) may be obtained.

A third convolution layer 430 processes an input signal via 4 filters, each having 3x1 size. As a result of the processing by the third convolution layer 430, a feature signal 435 with a size of (32, 4, 4) may be obtained.

A reshape layer 440 obtains a frequency feature signal 109 with a size of (128, 4) by changing the feature signal 435 with the size of (32, 4, 4). The reshape layer 440 may obtain the frequency feature signal 109 with the size of (128, 4) by moving, in a time-axis direction, samples identified by a second frequency bin to a fourth frequency bin from among samples of the feature signal 435 with the size of (32, 4, 4).

The first DNN 400 obtains the frequency feature signal 109 having the same number of channels as the first audio signal 107 of the frequency domain, but, in a predetermined time period, the number of samples of each channel thereof is smaller than the first audio signal 107 of the frequency domain. While FIG. 4 illustrates that the first DNN 400 includes 3 convolution layers and 1 reshape layer, but this is merely an example, and provided that the frequency feature signal 109 can be obtained, wherein the number of channels thereof is equal to the first audio signal 107 of the frequency domain and the number of samples thereof is smaller than the first audio signal 107 of the frequency domain, the number of convolution layers and reshape layers included in the first DNN 400 may vary. Equally, a reshape layer may be replaced with a convolution layer, and the number and size of filters used in each convolution layer may vary.

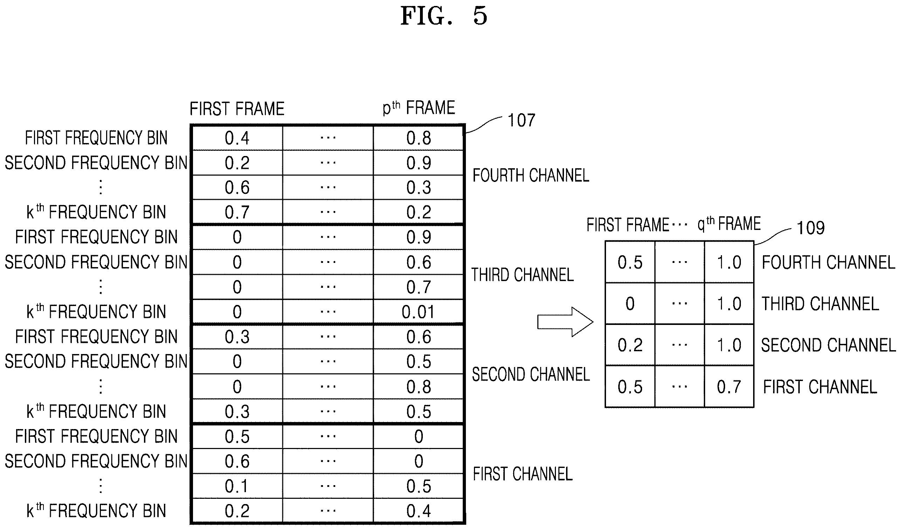

FIG. 5 illustrates comparison between the first audio signal 107 of the frequency domain and the frequency feature signal 109 shown in FIG. 4.

Each sample of the first audio signal 107 of the frequency domain is identified according to a frame (i.e., a time), a frequency bin and a channel. Referring to FIG. 5, k samples exist in a first channel during a first frame.

The frequency feature signal 109 has a small number of samples per channel during a predetermined time period, compared to the first audio signal 107 of the frequency domain. For example, the number of samples of each channel during the predetermined time period may be 1. As illustrated in FIG. 5, the number of samples included in the first channel during the first frame may be 1.

Samples of the frequency feature signal 109 may be a representative value of a plurality of frequency bands of a particular channel during the predetermined time period. For example, a representative value of a fourth channel during the first frame, i.e., a sample value of 0.5 may be a representative value of frequency bands corresponding to a first frequency bin to a kth frequency bin during the first frame.

As described above, the frequency feature signal 109 may indicate a correlation between channels of the first audio signal 105, in particular, may indicate a correlation between channels of the first audio signal 105 in a frequency domain. For example, that a sample value of a third channel during the first frame of the frequency feature signal 109 is 0 may mean that samples of a third channel signal during the first frame of the first audio signal 107 of the frequency domain, i.e., frequency coefficients, may be 0. Also, that a sample value of a first channel is 0.5 and a sample value of a second channel is 0.2 during the first frame of the frequency feature signal 109 may mean that non-zero frequency components, i.e., non-zero frequency coefficients, in a first channel signal during the first frame of the first audio signal 107 of the frequency domain may be greater than a second channel signal.

A correlation between channels is signaled to the decoding apparatus 900 by using the frequency feature signal 109 having a smaller number of samples compared to the first audio signal 107 of the frequency domain, and thus, the number of bits of audio data may be decreased, compared to a case of using the first audio signal 107 of the frequency domain.

FIG. 6 illustrates a second DNN 600.

The second DNN 600 includes at least one convolution layer and at least one reshape layer.

The at least one convolution layer included in the second DNN 600 may be one-dimensional convolution layer, unlike a two-dimensional convolution layer of the first DNN 400. A filter of the one-dimensional convolution layer moves only in a horizontal direction or vertical direction according to a stride, for convolution processing, but a filter of the two-dimensional convolution layer moves in horizontal and vertical directions, according to a stride.

Referring to FIG. 6, the first audio signal 105 is input to the second DNN 600. Samples of the first audio signal 105 are identified by a time and a channel. That is, the first audio signal 105 may be two-dimensional data.

A first convolution layer 610 convolution-processes the first audio signal 105 via a filters, each having a size of 33. That the size of the filter of the first convolution layer 610 is 33 may mean that a horizontal size of the filter is 33, and a vertical size thereof is equal to a vertical size of an input signal, i.e., a vertical size (the number of channels) of the first audio signal 105. As a result of the processing by the first convolution layer 610, a feature signal 615 with a size of (128, a) is output.

A second convolution layer 620 receives an input of an output signal of the first convolution layer 610, and then processes the input signal via b filters, each having a size of 33. As a result of the processing, an audio feature signal 625 with a size of (128, b) may be obtained. According to a combination scheme of the frequency feature signal 109 to be described below, a size of the audio feature signal 625 may be (128, b-4).

The frequency feature signal 109 may be embedded during a processing procedure of the second DNN 600 with respect to the first audio signal 105, and as illustrated in FIG. 6, the frequency feature signal 109 may be combined with the audio feature signal 625, and an integrated feature signal 628 obtained as a result of the combination may be input to a next layer.

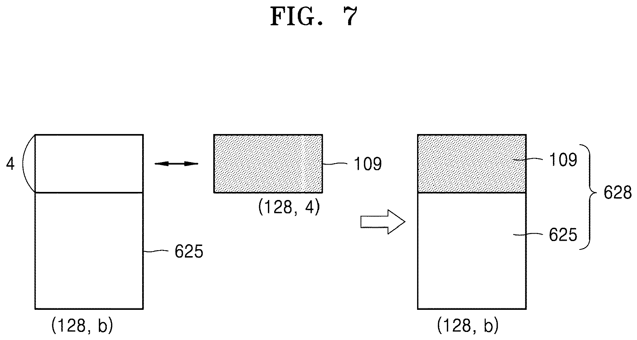

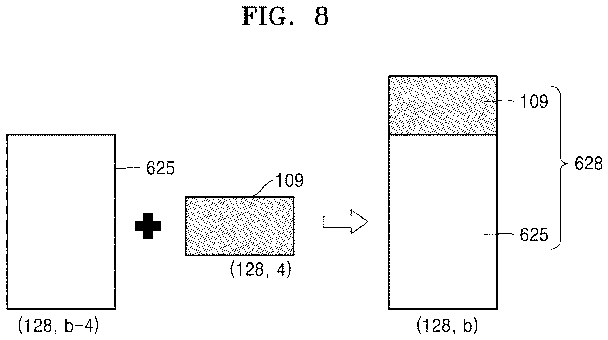

A method of combining the frequency feature signal 109 with the audio feature signal 625 will now be described with reference to FIGS. 7 and 8.

FIGS. 7 and 8 illustrate a method of combining the audio feature signal 625 with the frequency feature signal 109.

Referring to FIG. 7, samples of a predetermined number of channels (4 in FIG. 7) of the audio feature signal 625 may be replaced with samples of the frequency feature signal 109. The channels of the audio feature signal 625 to be replaced may include a predetermined number of consecutive channels starting from a first channel or a predetermined number of consecutive channels starting from a last channel from among the channels of the audio feature signal 625. For example, when the frequency feature signal 109 has 4 channels, samples of a first channel to a fourth channel of the audio feature signal 625 are replaced with samples of the frequency feature signal 109, such that the integrated feature signal 628 may be obtained.

Next, referring to FIG. 8, the frequency feature signal 109 may be added to the audio feature signal 625. That is, when the audio feature signal 625 has b-4 channels and the frequency feature signal 109 has 4 channels, the frequency feature signal 109 may be added to the audio feature signal 625 so as to obtain the integrated feature signal 628 having b channels. The frequency feature signal 109 may be added to the front of a first channel of the audio feature signal 625 or may be added to the rear of a last channel of the audio feature signal 625.

In FIGS. 7 and 8, the reason of combining the frequency feature signal 109 with the front portion or the rear portion of the audio feature signal 625 is for the decoding apparatus 900 to easily separate the frequency feature signal from the integrated feature signal.

Referring back to FIG. 6, the integrated feature signal 628 is input to a reshape layer 630. The integrated feature signal 628 with a size of (128, b) may be changed to a feature signal 635 with a size of 16384, 2) via the reshape layer 630.

An output signal 635 of the reshape layer 630 is input to a third convolution layer 640. The third convolution layer 640 obtains the second audio signal 115 with a size of (16384, 2) by convolution-processing a signal input via two filters, each having a size of 1. That the size of the second audio signal 115 is (16384, 2) means that the second audio signal 115 is a stereo signal of 16384 frames having 2 channels. When the second audio signal 115 is a mono signal, a size of the second audio signal 115 may be (16384, 1).

The second DNN 600 outputs the second audio signal 115 that has the same time length as a time length of the first audio signal 105 and has a smaller number of channels than the number of channels of the first audio signal 105. Provided that the second DNN 600 can output such second audio signal 115, the second DNN 600 may have various structures other than a structure shown in FIG. 6. In other words, while FIG. 6 illustrates that the second DNN 600 includes 3 convolution layers and 1 reshape layer, this is merely an example, and thus, the number of convolution layers and reshape layers included in the second DNN 600 may vary, provided that the second audio signal 115 having the same time length as a time length of the first audio signal 105 and having a smaller number of channels than the number of channels of the first audio signal 105 is obtainable. Equally, a reshape layer may be replaced with a convolution layer, and the number and size of filters used in each convolution layer may vary.

The encoding apparatus 200 may transmit audio data obtained via AI-encoding and first encoding to the decoding apparatus 900 via a network. The audio data may be stored in a data storage medium including a magnetic medium such as a hard disk, a floppy disk, or a magnetic tape, an optical recording medium such as a compact disc read-only memory (CD-ROM) or a digital versatile disc (DVD), or a magneto-optical medium such as a floptical disk.

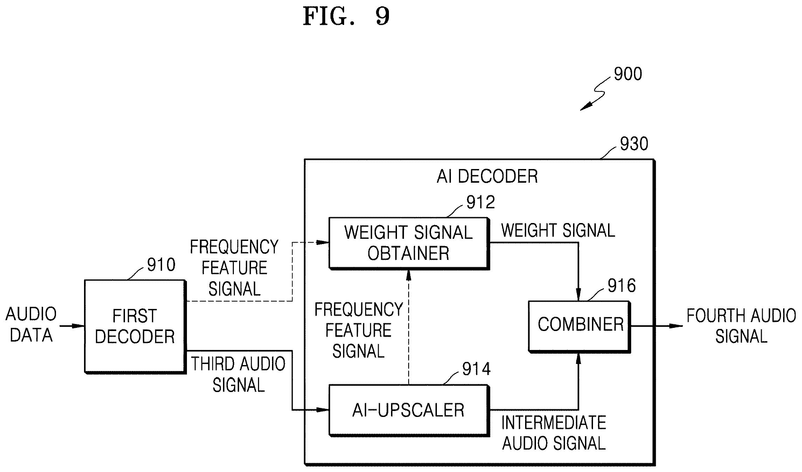

FIG. 9 illustrates a block diagram of a configuration of the audio decoding apparatus 900.

Referring to FIG. 9, the decoding apparatus 900 includes a first decoder 910 and an AI-decoder 930. The AI-decoder 930 may include a weight signal obtainer 912, an AI-upscaler 914, and a combiner 916.

While FIG. 9 illustrates the first decoder 910 and the AI-decoder 930 as individual elements, the first decoder 910 and the AI-decoder 930 may be implemented by one processor. In this case, they may be implemented as a dedicated processor or may be implemented as a combination of software and a general-purpose processor, such as an AP, a CPU, or a GPU. The dedicated processor may include a memory for implementing the present disclosure or may include a memory processor for using an external memory.

The first decoder 910 and the AI-decoder 930 may be configured by a plurality of processors. In this case, they may be implemented as a combination of dedicated processors or a combination of software and a plurality of general-purpose processors such as AP, CPU or GPU. The weight signal obtainer 912, the AI-upscaler 914, and the combiner 916 may be implemented by different processors.

The first decoder 910 obtains audio data. The audio data obtained by the first decoder 910 may be referenced as an input audio signal. The audio data may be received via a network or may be obtained from a data storage medium including a magnetic medium such as a hard disk, a floppy disk, or a magnetic tape, an optical recording medium such as a CD-ROM or a DVD, or a magneto-optical medium such as a floptical disk.

The first decoder 910 first encodes the audio data. The third audio signal 135 is obtained as a result of the first encoding with respect to the audio data, and the third audio signal 135 is output to the AI-upscaler 914. The third audio signal 135 may include m channels as the second audio signal 115.

As described above, when a frequency feature signal is included in a supplemental region of audio data, the frequency feature signal is reconstructed via first encoding with respect to the audio data. When a frequency feature signal is embedded in the third audio signal 135, the frequency feature signal may be obtained via processing by a fourth DNN of the AI-upscaler 914.

The AI-decoder 930 reconstructs the fourth audio signal 145 including n channels, based on the third audio signal 135 and the frequency feature signal.

As a signal loss according to a channel change due to AI-downscale cannot be compensated for, by only obtaining the fourth audio signal 145 by AI-upscaling the third audio signal 135, the AI-decoder 930 obtains, from the frequency feature signal, a weight signal for compensating for the signal loss.

In detail, the weight signal obtainer 912 obtains a weight signal of n channels by processing a frequency feature signal of n channels via a third DNN. A time length of the weight signal may be equal to a time length of an intermediate audio signal obtained by the AI-upscaler 914 and may be greater than a time length of the frequency feature signal. Sample values included in the weight signal are weights to be respectively applied to samples of the intermediate audio signal obtained by the AI-upscaler 914, and are used to reflect a correlation between channels of the first audio signal 105 with respect to sample values of each channel of the intermediate audio signal.

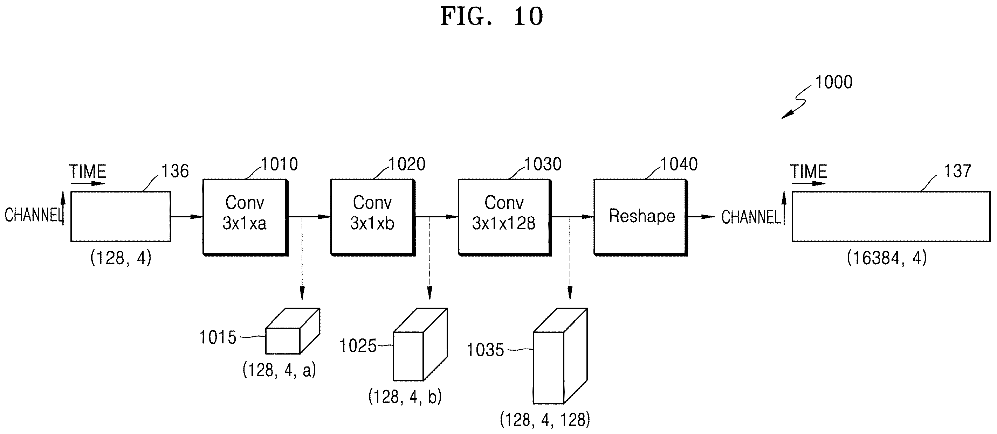

The third DNN of the weight signal obtainer 912 will now be described with reference to FIG. 10.

FIG. 10 illustrates a third DNN 1000.

Referring to FIG. 10, the third DNN 1000 may include at least one convolution layer and at least one reshape layer. The convolution layer included in the third DNN 1000 may be a two-dimensional convolution layer.

A frequency feature signal 136 is input to the third DNN 1000, and a weight signal 137 is obtained via a processing procedure in the third DNN 1000.

As illustrated in FIG. 10, a size of the frequency feature signal 136 is (128, 4), which means that the frequency feature signal 136 has 4 channels of 128 frames.

A first convolution layer 1010 obtains a feature signal 1015 with a size of (128, 4, a) by processing the frequency feature signal 136 via a filters, each having 3x1 size.

A second convolution layer 1020 obtains a feature signal 1025 with a size of (128, 4, b) by processing an input signal via b filters, each having 3x1 size.

A third convolution layer 1030 obtains a feature signal 1035 with a size of (128, 4, 128) by processing an input signal via 128 filters, each having 3x1 size.

A reshape layer 1040 obtains the weight signal 137 with a size of (16384, 4) by changing locations of samples in the feature signal 1035 with a size of (128, 4, 128). For example, the reshape layer 1040 may obtain the weight signal 137 with a size of (16384, 4) by moving, on a time axis, samples of a second frequency bin to a 128th frequency bin from among samples in the feature signal 1035 with a size of (128, 4, 128).

The third DNN 1000 obtains the weight signal 137 having the same time length and channels as a time length and channels of the intermediate audio signal output from the AI-upscaler 914. Therefore, provided that the third DNN 1000 can output such weight signal 137, the third DNN 1000 may have various structures other than a structure shown in FIG. 10. In other words, while FIG. 10 illustrates that the third DNN 1000 includes 3 convolution layers and 1 reshape layer, this is merely an example, and thus, the number of convolution layers and reshape layers included in the third DNN 1000 may vary, provided that the weight signal 137 having the same time length and channels as a time length and channels of the intermediate audio signal is obtainable. Equally, a reshape layer may be replaced with a convolution layer, and the number and size of filters used in each convolution layer may vary.

In the above, the first DNN 400 obtains the frequency feature signal 109 with respect to the first audio signal 107 of the frequency domain which is transformed from the first audio signal 105, whereas the weight signal obtainer 912 does not inverse-transform the frequency feature signal 136 or the weight signal 137 into a time domain. This is to prevent a delay due to inverse-transformation in a server-client structure. In other words, for fast content consumption by a client terminal receiving an audio signal from a server in a streaming manner, a delay due to inverse-transformation is terminated.

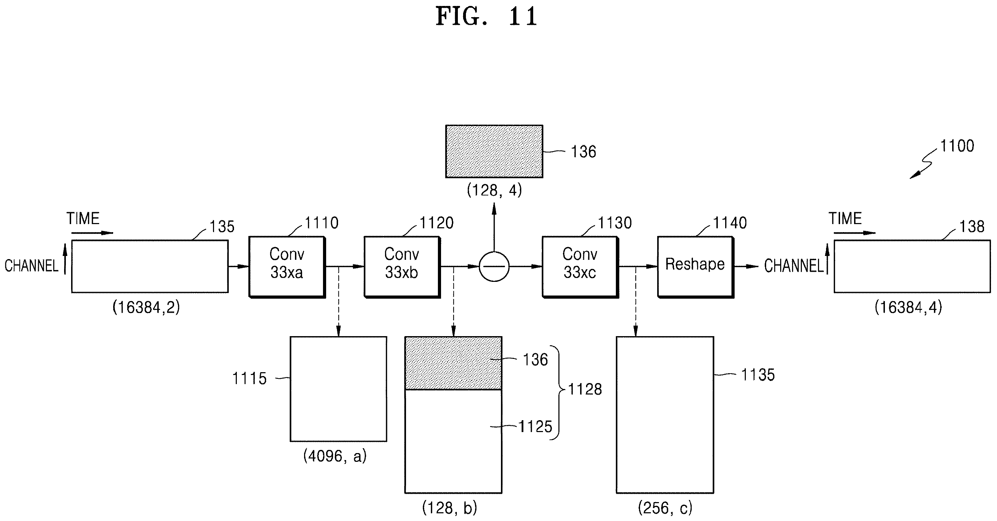

Next, a fourth DNN of the AI-upscaler 914 will now be described with reference to FIG. 11.

FIG. 11 illustrates a fourth DNN 1100.

Referring to FIG. 11, the fourth DNN 1100 may include at least one convolution layer and at least one reshape layer. The convolution layer included in the fourth DNN 1100 may be a one-dimensional convolution layer.

The third audio signal 135 is input to the fourth DNN 1100, and is AI-upscaled to an intermediate audio signal 138 via a processing procedure in the fourth DNN 1100.

As illustrated in FIG. 11, a size of the third audio signal 135 is (16384, 2), which means that the third audio signal 135 has 2 channels of 16384 frames.

A first convolution layer 1110 obtains a feature signal 1115 with a size of (4096, a) by processing the third input signal 135 via a filters, each having 33 size.

A second convolution layer 1120 obtains an integrated feature signal 1128 with a size of (128, b) by processing an input signal via b filters, each having 33 size. In a training procedure to be described below, the fourth DNN 1100 may be trained to output, via the second convolution layer 1120, the integrated feature signal 1128 being equal/similar to the integrated feature signal 628 obtained during a processing procedure by the second DNN 600 with respect to the first audio signal 105.

When the frequency feature signal 136 is embedded in the third audio signal 135, the frequency feature signal 136 is extracted from the integrated feature signal 1128. In more detail, samples of a predetermined number of consecutive channels starting from a first channel or a predetermined number of consecutive channels starting from a last channel from among channels of the integrated feature signal 1128 may be extracted as the frequency feature signal 136. As described above, the frequency feature signal 136 is transmitted to the weight signal obtainer 912.

A third convolution layer 1130 obtains a feature signal 1135 with a size of (256, c) by processing an input signal (e.g., an audio feature signal 1125 separated from an integrated feature signal 1128) via c filters, each having 33 size.

A reshape layer outputs an intermediate audio signal 138 with a size of (16384, 4) by changing locations of samples in the feature signal 1135 with a size of (256, c).

The fourth DNN 1100 obtains the intermediate audio signal 138 having the same time length and channels as the time length and channels of the first audio signal 105. Therefore, provided that the fourth DNN 1100 can output such intermediate audio signal 138, the fourth DNN 1100 may have various structures other than a structure shown in FIG. 11. In other words, while FIG. 11 illustrates that the fourth DNN 1100 includes 3 convolution layers and 1 reshape layer, this is merely an example, and thus, the number of convolution layers and reshape layers included in the fourth DNN 1100 may vary, provided that the intermediate audio signal 138 having the same time length and channels as the time length and channels of the first audio signal 105 is obtainable. Equally, a reshape layer may be replaced with a convolution layer, and the number and size of filters used in each convolution layer may vary.

Referring back to FIG. 9, the weight signal output by the weight signal obtainer 912 and the intermediate audio signal output by the AI-upscaler 914 may be input to the combiner 916, and the combiner 916 may obtain the fourth audio signal 145 by applying samples of the weight signal to samples of the intermediate audio signal. For example, the combiner 916 may obtain the fourth audio signal 145 by multiplying in a 1:1 manner sample values of the intermediate audio signal by respectively corresponding sample values of the weight signal.

Unlike the decoding apparatus 900 shown in FIG. 9, a legacy decoding apparatus incapable of performing AI-decoding may obtain the third audio signal 135 by first decoding audio data. The legacy decoding apparatus may output the third audio signal 135 for reproduction via a speaker. That is, the audio data obtained as a result of the first encoding with respect to the second audio signal 115 may have lower compatibility that is available for both the decoding apparatus 900 capable of performing AI-decoding and the legacy decoding apparatus incapable of performing AI-decoding.

Hereinafter, with reference to FIGS. 12 to 17, a method of training the first DNN 400, the second DNN 600, the third DNN 1000 and the fourth DNN 1100 will now be described.

FIG. 12 illustrates a method of training the first DNN 400, the second DNN 600, the third DNN 1000 and the fourth DNN 1100.

FIG. 12 illustrates a method of training the second DNN 600 for embedding a frequency feature signal in the second audio signal 115.

A first training signal 1201 in FIG. 12 corresponds to the first audio signal 105, and a second training signal 1205 corresponds to the second audio signal 115. Also, a third training signal 1206 corresponds to the third audio signal 135, and a fourth training signal 1210 corresponds to the fourth audio signal 145.

A frequency domain training signal 1202 is obtained via frequency transformation (1220) with respect to the first training signal 1201, and the frequency domain training signal 1202 is input to the first DNN 400. The first DNN 400 obtains a frequency feature signal for training 1203 by processing the frequency domain training signal 1202 according to a preset parameter. The frequency feature signal for training 1203 and the first training signal 1201 are input to the second DNN 600, and the second DNN 600 obtains the second training signal 1205 in which the frequency feature signal for training 1203 is embedded via the preset parameter.

The second training signal 1205 is changed to the third training signal 1206 via first encoding and first decoding (1250). In more detail, audio data for training is obtained via first encoding with respect to the second training signal 1205, and the third training signal 1206 is obtained via first decoding with respect to the audio data for training. The third training signal 1206 is input to the fourth DNN 1100. The fourth DNN 1100 obtains a frequency feature signal for training 1207 and an intermediate audio signal for training 1209 from the third training signal 1206 via a preset parameter. The third DNN 1000 obtains a weight signal for training 1208 by processing the frequency feature signal for training 1207 via a preset parameter. The fourth training signal 1210 is obtained by combining the weight signal for training 1208 with the intermediate audio signal for training 1209.

In FIG. 12, the frequency feature signal for training 1203 obtained by the first DNN 400 is input to a DNN for training 1240, and the DNN for training 1240 is a DNN for verifying whether the frequency feature signal for training 1203 is accurately generated by the first DNN 400. The DNN for training 1240 may have a mirror structure of the first DNN 400. The DNN for training 1240 reconstructs a frequency domain training signal 1204 by processing the frequency feature signal for training 1203.

Generation loss information (LossDG) 1260 is obtained as a result of comparison between the frequency domain training signal 1202 obtained via frequency transformation (1220) and the frequency domain training signal 1204 obtained by the DNN for training 1240. The generation loss information (LossDG) 1260 may include at least one of a L1-norm value, a L2-norm value, a Structural Similarity (SSIM) value, a Peak Signal-To-Noise Ratio-Human Vision System (PSNR-HVS) value, a Multiscale SSIM (MS-SSIM) value, a Variance Inflation Factor (VIF) value and a Video Multimethod Assessment Fusion (VMAF) value between the frequency domain training signal 1202 obtained via frequency transformation (1220) and the frequency domain training signal 1204 obtained by the DNN for training 1240. For example, the generation loss information 1260 may be expressed as Equation 1 below.

$$[\text{Equation 1}]$$

$$\text{LossDG} = \|F(A_{\text{nch}}) - D(C_{\text{Embed}})\|_2^2$$

In Equation 1, F() indicates frequency transformation (1220), and $A_{\text{nch}}$ indicates the first training signal 1201. D() indicates processing by the DNN for training 1240, and $C_{\text{Embed}}$ indicates the frequency feature signal for training 1203.

The generation loss information 1260 indicates how much the frequency domain training signal 1204 obtained by processing the frequency feature signal for training 1203 by the DNN for training 1240 is similar to the frequency domain training signal 1202 obtained via frequency transformation (1220).

The first training signal 1201 is changed to a few-channel training signal via legacy downscale 1230, and down loss information (LossDown) 1270 is obtained as a result of comparison between the few-channel training signal and the second training signal 1205. The down loss information (LossDown) 1270 may include at least one of a L1-norm value, a L2-norm value, a SSIM value, a PSNR-HVS value, a MS-SSIM value, a VIF value and a VMAF value between a few-channel training signal and the second training signal 1205. For example, the down loss information 1270 may be expressed as Equation 2 below.

$$[\text{Equation 2}]$$

$$\text{LossDown} = (1-\beta) \cdot \|S_{\text{mch}} - S_{\text{Label}}\|_2^2 + \beta \cdot \|F(S_{\text{mch}}) - F(S_{\text{label}})\|_2^2$$

In Equation 2, $\beta$ is a predetermined weight, $S_{\text{mch}}$ is the second training signal 1205, and $S_{\text{Label}}$ indicates the few-channel training signal. F() indicates frequency transformation.

The down loss information 1270 indicates how much the second training signal 1205 in which the frequency feature signal for training 1203 is embedded is similar to the few-channel training signal obtained via legacy downscale 1230. As the second training signal 1205 is more similar to the few-channel training signal, a quality of the third training signal 1206 may be improved. In particular, a quality of a signal reconstructed by a legacy decoding apparatus may be improved.

According to a result of comparison between the first training signal 1201 and the fourth training signal 1210, up loss information (LossUp) 1280 is obtained. The up loss information (LossUp) 1280 may include at least one of a L1-norm value, a L2-norm value, a SSIM value, a PSNR-HVS value, a MS-SSIM value, a VIF value and a VMAF value between the first training signal 1201 and the fourth training signal 1210. For example, the up loss information 1280 may be expressed as Equation 3 below.

$$[\text{Equation 3}]$$

$$\text{LossUp} = (1-\beta) \cdot \|A_{\text{Pnch}} - A_{\text{nch}}\|_2^2 + \beta \cdot \|F(A_{\text{Pnch}}) - F(A_{\text{nch}})\|_2^2$$

In Equation 3, $\beta$ is a predetermined weight, $A_{\text{nch}}$ indicates the first training signal 1201, and $A_{\text{pnch}}$ indicates the

fourth training signal 1210. F() indicates frequency transformation.

The up loss information 1280 indicates how accurately the weight signal for training 1208 and the intermediate audio signal for training 1209 are generated.

According to a result of comparison between the frequency feature signal for training 1203 output by the first DNN 400 and the frequency feature signal for training 1207 extracted by the fourth DNN 1100, matching loss information (LossM) 1290 is obtained. The matching loss information (LossM) 1290 may include at least one of a L1-norm value, a L2-norm value, a SSIM value, a PSNR-HVS value, a MS-SSIM value, a VIF value and a VMAF value between the two frequency feature signals for training 1203 and 1207. For example, the matching loss information 1290 may be expressed as Equation 4 below.

[Equation 4]

$$\mathrm{LossM} = \|C_{\mathbf{Embed}} - C_{\mathbf{Extract}}\|_2^2$$

In Equation 4, $C_{\mathrm{Embed}}$ indicates the frequency feature signal for training 1203 embedded in the second training signal 1205, and $C_{\mathrm{Extract}}$ indicates the frequency feature signal for training 1207 extracted by the fourth DNN 1100.

The matching loss information 1290 indicates how much an integrated feature signal intermediately output by the fourth DNN 1100 is similar to an integrated feature signal obtained by the second DNN 600. When the integrated feature signal output by the fourth DNN 1100 is similar to the integrated feature signal obtained by the second DNN 600, two frequency feature signals thereof are also similar.

The first DNN 400, the second DNN 600, the third DNN 1000 and the fourth DNN 1100 may update a parameter to decrease or minimize final loss information obtained by combining at least one of the generation loss information 1260, the down loss information 1270, the up loss information 1280, and the matching loss information 1290.

In detail, the first DNN 400 and the DNN for training 1240 may update a parameter to decrease or minimize the generation loss information 1260. Also, the second DNN 600, the third DNN 1000 and the fourth DNN 1100 may each update a parameter to decrease or minimize the final loss information obtained as a result of the combination of the down loss information 1270, the up loss information 1280, and the matching loss information 1290.

Equation of training of the first DNN 400 and the DNN for training 1240 is as below.

[Equation 5]

$$\underset{\omega_{\mathbf{Phase1}}}{\mathrm{argmin}}(\boldsymbol{Loss_{DG}})$$

In Equation 5, $\omega_{\mathrm{Phase1}}$ indicates a parameter set of the first DNN 400 and the DNN for training 1240. The first DNN 400 and the DNN for training 1240 obtain, via training, the parameter set to minimize the generation loss information (LossDG) 1260.

Equation of training of the second DNN 600, the third DNN 1000 and the fourth DNN 1100 is as below.

[Equation 6]

$$\underset{\omega_{\mathbf{Phase2}}}{\mathrm{argmin}}(\alpha\cdot\boldsymbol{Loss_{down}} + (1\text{-}\alpha)\cdot\boldsymbol{Loss_{up}} + \gamma\cdot\boldsymbol{Loss_{M}})$$

In Equation 6, $\omega_{\mathrm{Phase2}}$ indicates a parameter set of the second DNN 600, the third DNN 1000 and the fourth DNN 1100, and $\alpha$ and Y indicate preset weights. The second DNN 600, the third DNN 1000 and the fourth DNN 1100 obtain the parameter set to minimize, via training, the final loss information that is the combination of the down loss information (LossDown) 1270, the up loss information (LossUp) 1280, and the matching loss information (LossM) 1290 according to the preset weights.

Training of the first DNN 400 and the DNN for training 1240 and training of the second DNN 600, the third DNN 1000 and the fourth DNN 1100 may be alternately performed. In more detail, the first DNN 400 and the DNN for training 1240 process an input signal according to an initially-set parameter, and then update the parameter according to the generation loss information 1260. Then, the first DNN 400 and the DNN for training 1240 process an input signal according to the updated parameter, and the second DNN 600, the third DNN 1000 and the fourth DNN 1100 process an input signal according to the initially-set parameter. The second DNN 600, the third DNN 1000 and the fourth DNN 1100 each update a parameter according to at least one of the matching loss information 1290, the up loss information 1280, and the down loss information 1270 obtained as a result of processing the input signal. When the updating of the parameter by the second DNN 600, the third DNN 1000 and the fourth DNN 1100 is completed, the first DNN 400 and the DNN for training 1240 update the parameter again. That is, training of the first DNN 400 and the DNN for training 1240 and training of the second DNN 600, the third DNN 1000 and the fourth DNN 1100 are alternately performed, such that a parameter of each DNN may be stably trained to a higher accuracy level.

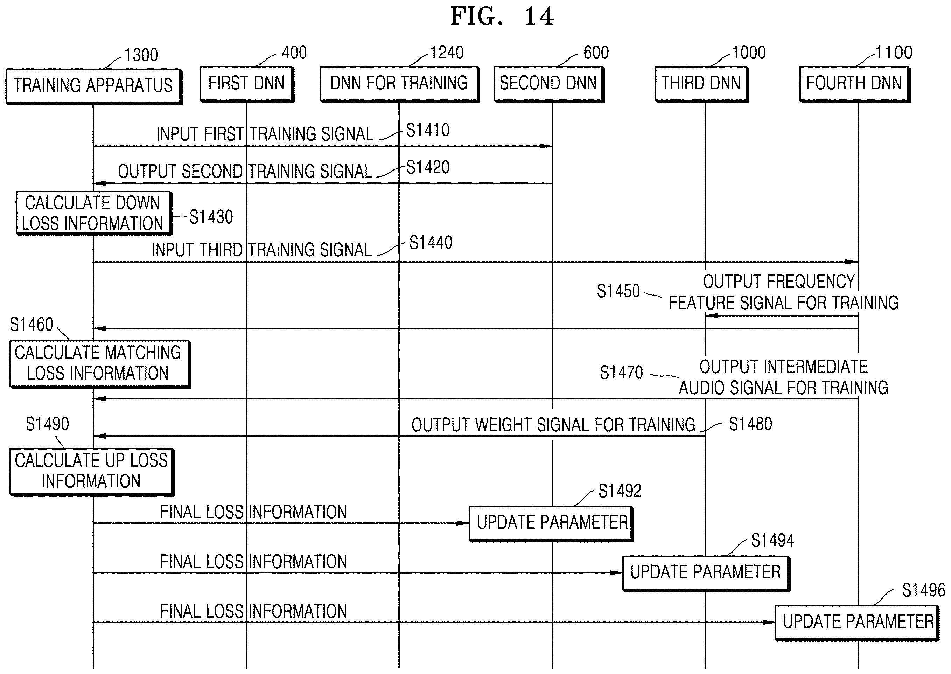

FIGS. 13 and 14 illustrate flowcharts for describing a procedure for training, by a training apparatus 1300, the first DNN 400, the second DNN 600, the third DNN 1000 and the fourth DNN 1100.

Training of the first DNN 400, the DNN for training 1240, the second DNN 600, the third DNN 1000 and the fourth DNN 1100 which is described with reference to FIG. 12 may be performed by the training apparatus 1300. The training apparatus 1300 may include the first DNN 400, the DNN for training 1240, the second DNN 600, the third DNN 1000 and the fourth DNN 1100. For example, the training apparatus 1300 may be the audio encoding apparatus 200 or a separate server. The third DNN 1000 and the fourth DNN 1100 obtained as a result of the training may be stored in the audio decoding apparatus 900.

The training apparatus 1300 initially sets parameters of the first DNN 400, the DNN for training 1240, the second DNN 600, the third DNN 1000 and the fourth DNN 1100 (S1310).

The training apparatus 1300 inputs, to the first DNN 400, the frequency domain training signal 1202 obtained from the first training signal 1201 via frequency transformation (1220) (S1320). The first DNN 400 outputs the frequency feature signal for training 1203 to the DNN for training 1240 (S1330), and the DNN for training 1240 outputs the reconstructed frequency domain training signal 1204 to the training apparatus 1300 (S1340).

The training apparatus 1300 compares the frequency domain training signal 1202 obtained via frequency transformation (1220) with the frequency domain training signal 1204 output from the DNN for training 1240, and thus, calculates the generation loss information 1260 (S1350). Then, the first DNN 400 and the DNN for training 1240 each update a parameter according to the generation loss information 1260 (S1360 and S1370).

The training apparatus 1300 inputs the frequency domain training signal 1202 obtained from the first training signal 1201 via frequency transformation (1220) back to the first DNN 400 (S1380). The first DNN 400 processes the frequency domain training signal 1202 via the updated parameter, and thus, outputs the frequency feature signal for training 1203 to the training apparatus 1300 and the second DNN 600 (S1390).

Next, in FIG. 14, the training apparatus 1300 inputs the first training signal 1201 to the second DNN 600 (S1410), and the second DNN 600 outputs the second training signal 1205 to the training apparatus 1300 by processing the frequency feature signal for training 1203 and the first training signal 1201 (S1420).

The training apparatus 1300 obtains the down loss information 1270 according to a result of comparison between the second training signal 1205 and a few-channel training signal legacy downscaled (1230) from the first training signal 1201 (S1430).

The training apparatus 1300 inputs, to the fourth DNN 1100, the third training signal 1206 obtained via first encoding and first decoding (1250) with respect to the second training signal 1205 (S1440), and the fourth DNN 1100 outputs the frequency feature signal for training 1207 to the third DNN 1000 and the training apparatus 1300 (S1450).

The training apparatus 1300 compares the frequency feature signal for training 1203 output by the first DNN 400 in operation S1390 with the frequency feature signal for training 1207 output by the fourth DNN 1100, and thus, calculates the matching loss information 1290 (S1460).

The fourth DNN 1100 outputs the intermediate audio signal for training 1209 by processing the third training signal 1206 (S1470), and the third DNN 1000 outputs the weight signal for training 1208 by processing the frequency feature signal for training 1207 (S1480).

The training apparatus 1300 obtains the fourth training signal 1210 by combining the intermediate audio signal for training 1209 with the weight signal for training 1208, and obtains the up loss information 1280 by comparing the first training signal 1201 with the fourth training signal 1210 (S1490).

The second DNN 600, the third DNN 1000 and the fourth DNN 1100 update parameters according to final loss information obtained by combining at least one of the down loss information 1270, the up loss information 1280, and the matching loss information 1290 (S1492, S1494, and S1496).

The training apparatus 1300 may repeat operations S1320 to S1496 until the parameters of the first DNN 400, the DNN for training 1240, the second DNN 600, the third DNN 1000 and the fourth DNN 1100 are optimized.

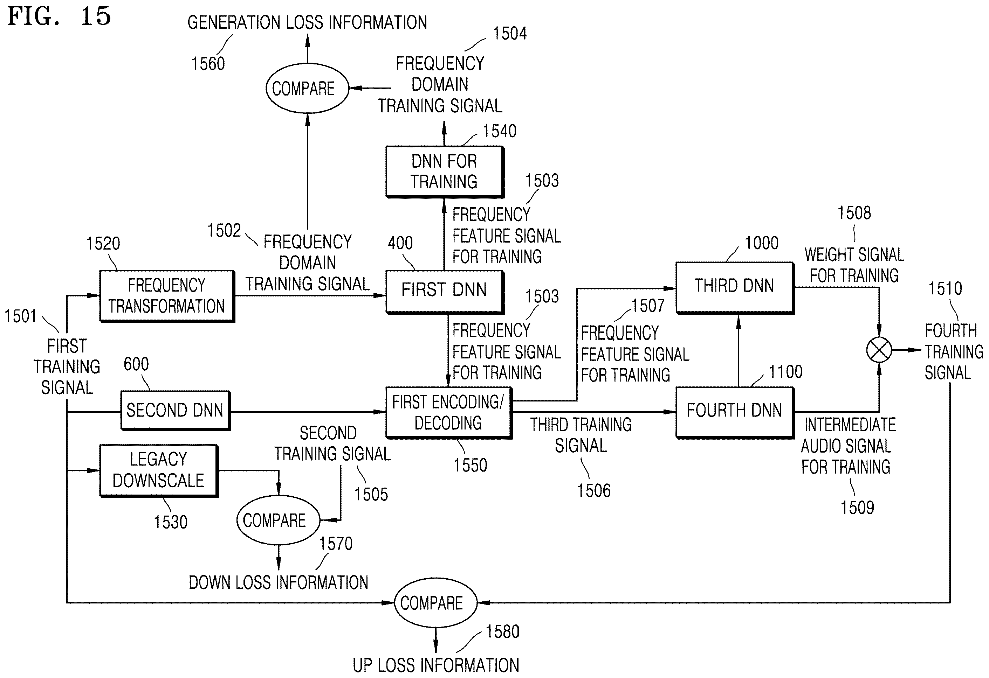

FIGS. 12 to 14 illustrate a training procedure of a case where a frequency feature signal is embedded in the second audio signal 115, and a training procedure of a case where a frequency feature signal is not embedded in the second audio signal 115 will now be described with reference to FIGS. 15 to 17.

FIG. 15 illustrates another method of training the first DNN 400, the second DNN 600, the third DNN 1000 and the fourth DNN 1100.

In FIG. 15, a first training signal 1501 corresponds to the first audio signal 105, and a second training signal 1505 corresponds to the second audio signal 115. Also, a third training signal 1506 corresponds to the third audio signal 135, and a fourth training signal 1510 corresponds to the fourth audio signal 145.

A frequency domain training signal 1502 is obtained via frequency transformation (1520) with respect to the first training signal 1501, and the frequency domain training signal 1502 is input to the first DNN 400. The first DNN 400 obtains a frequency feature signal for training 1503 by processing the frequency domain training signal 1502 according to a preset parameter.

The first training signal 1501 is input to the second DNN 600, and the second DNN 600 obtains the second training signal 1505 via the preset parameter.

The frequency feature signal for training 1503 and the second training signal 1505 are processed via first encoding and first decoding (1550). In more detail, audio data for training is obtained via first encoding with respect to the frequency feature signal for training 1503 and the second training signal 1505, and the third training signal 1506 and a frequency feature signal for training 1507 are obtained via first decoding with respect to the audio data for training. The frequency feature signal for training 1507 is input to the third DNN 1000, and the third training signal 1506 is input to the fourth DNN 1100. The third DNN 1000 obtains a weight signal for training 1508 by processing the frequency feature signal for training 1507 via the preset parameter.

The fourth DNN 1100 obtains an intermediate audio signal for training 1509 from the third training signal 1506 via the preset parameter. The fourth training signal 1510 is obtained by combining the weight signal for training 1508 with the intermediate audio signal for training 1509.

In FIG. 15, the frequency feature signal for training 1503 obtained by the first DNN 400 is input to a DNN for training 1540, and the DNN for training 1540 is a DNN for verifying whether the frequency feature signal for training 1503 is accurately generated by the first DNN 400. The DNN for training 1540 may have a mirror structure of the first DNN 400. The DNN for training 1540 reconstructs a frequency domain training signal 1504 by processing the frequency feature signal for training 1503.

Generation loss information (LossDG) 1560 is obtained as a result of comparison between the frequency domain training signal 1502 obtained via frequency transformation (1520) and the frequency domain training signal 1504 obtained by the DNN for training 1540. The generation loss information (LossDG) 1560 may include at least one of a L1-norm value, a L2-norm value, a SSIM value, a PSNR-HVS value, a MS-SSIM value, a VIF value and a VMAF value between the frequency domain training signal 1502 obtained via frequency transformation (1520) and the frequency domain training signal 1504 obtained by the DNN for training 1540. For example, the generation loss information 1560 may be expressed as Equation 1 described above.

The first training signal 1501 is changed to a few-channel training signal via legacy downscale 1530, and down loss information (LossDown) 1570 is obtained as a result of comparison between the few-channel training signal and the second training signal 1505. The down loss information (LossDown) 1570 may include at least one of a L1-norm value, a L2-norm value, a SSIM value, a PSNR-HVS value, a MS-SSIM value, a VIF value and a VMAF value between the few-channel training signal and the second training signal 1505. For example, the down loss information 1570 may be expressed as Equation 2 described above.

According to a result of comparison between the first training signal 1501 and the fourth training signal 1510, up loss information (LossUp) 1580 is obtained. The up loss information (LossUp) 1580 may include at least one of a L1-norm value, a L2-norm value, a SSIM value, a PSNR-HVS value, a MS-SSIM value, a VIF value and a VMAF value between the first training signal 1501 and the fourth training signal 1510. For example, the up loss information 1580 may be expressed as Equation 3 described above.

Compared to the training procedure described in FIG. 12, in the training procedure of FIG. 15, the matching loss information (LossM) 1290 is not obtained. It is because, in the training procedure of FIG. 15, the frequency feature signal for training 1503 is not embedded in the second training signal 1505, and a sameness between the frequency feature signal for training 1507 obtained via first decoding and the frequency feature signal for training 1503 obtained via the first DNN 400 is recognized.

The first DNN 400, the second DNN 600, the third DNN 1000 and the fourth DNN 1100 may each update a parameter to decrease or minimize final loss information obtained by combining at least one of the generation loss information 1560, the down loss information 1570, and the up loss information 1580.

In detail, the first DNN 400 and the DNN for training 1540 may update a parameter to decrease or minimize the generation loss information 1560. Also, the second DNN 600, the third DNN 1000 and the fourth DNN 1100 may each update a parameter to decrease or minimize the final loss information obtained as a result of the combination of the down loss information 1570 and the up loss information 1580.

Training of the first DNN 400 and the DNN for training 1540 may be expressed as Equation 5 described above, and training of the second DNN 600, the third DNN 1000 and the fourth DNN 1100 may be expressed as Equation 7 below.

[Equation 7]

$$\underset{\omega_{Phase2}}{argmin}(\alpha \cdot Loss_{down} + (1-\alpha) \cdot Loss_{up})$$

In Equation 7, $\omega_{Phase2}$ indicates a parameter set of the second DNN 600, the third DNN 1000 and the fourth DNN 1100, and $\alpha$ indicates a preset weight. The second DNN 600, the third DNN 1000 and the fourth DNN 1100 obtain the parameter set to minimize, via training, the final loss information obtained as a result of the combination of the down loss information (LossDown) 1570 and the up loss information (LossUp) 1580.

Training of the first DNN 400 and the DNN for training 1540 and training of the second DNN 600, the third DNN 1000 and the fourth DNN 1100 may be alternately performed. In more detail, the first DNN 400 and the DNN for training 1540 process an input signal according to an initially-set parameter, and then update the parameter according to the generation loss information 1560. Then, the first DNN 400 and the DNN for training 1540 process an input signal according to the updated parameter, and the second DNN 600, the third DNN 1000 and the fourth DNN 1100 process an input signal according to the initially-set parameter. The second DNN 600, the third DNN 1000 and the fourth DNN 1100 each update a parameter according to at least one of the up loss information 1580 and the down loss information 1570 obtained as a result of processing the input signal. When the updating of the parameter by the second DNN 600, the third DNN 1000 and the fourth DNN 1100 is completed, the first DNN 400 and the DNN for training 1540 update the parameter again.

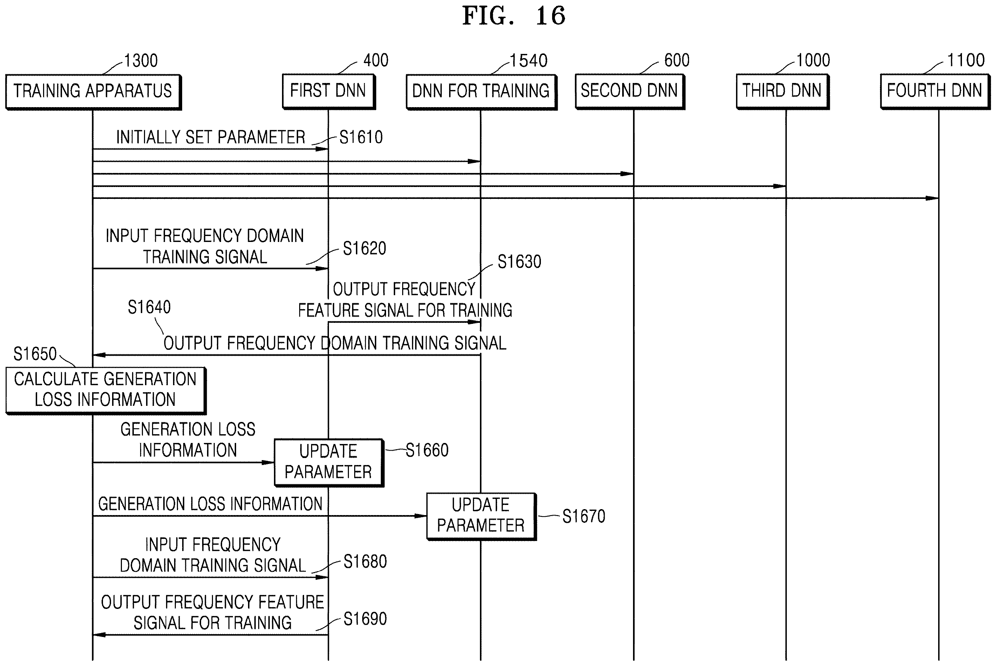

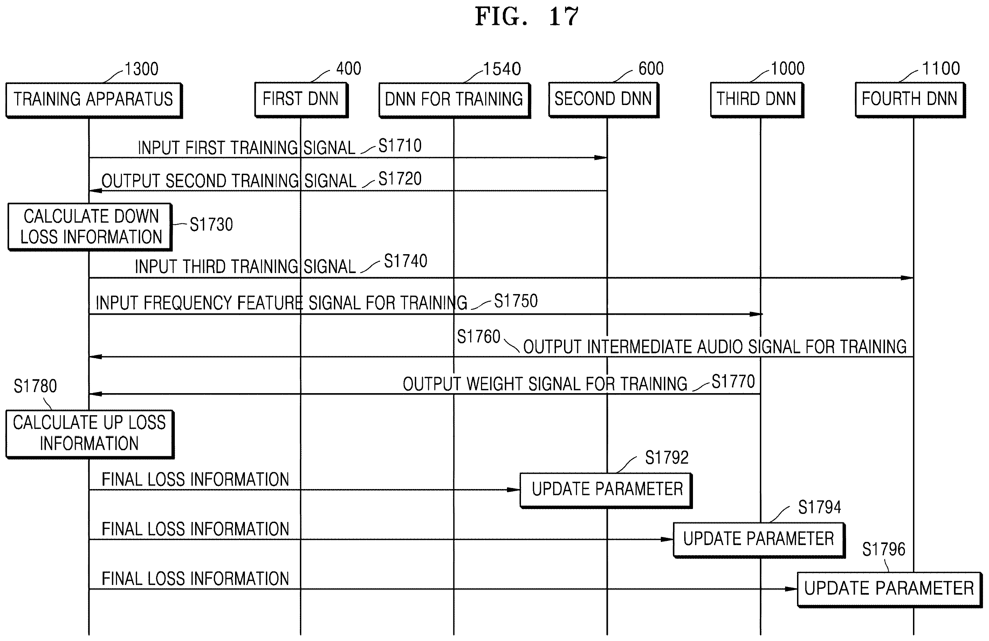

FIGS. 16 and 17 illustrate flowcharts for describing a procedure for training, by the training apparatus 1300, the first DNN 400, the second DNN 600, the third DNN 1000 and the fourth DNN 1100.

Training of the first DNN 400, the DNN for training 1240, the second DNN 600, the third DNN 1000 and the fourth DNN 1100 which is described with reference to FIG. 15 may be performed by the training apparatus 1300. The training apparatus 1300 may include the first DNN 400, the DNN for training 1540, the second DNN 600, the third DNN 1000 and the fourth DNN 1100. For example, the training apparatus 1300 may be the audio encoding apparatus 200 or a separate server. The third DNN 1000 and the fourth DNN 1100 obtained as a result of the training may be stored in the audio decoding apparatus 900.

Referring to FIG. 16, the training apparatus 1300 initially sets parameters of the first DNN 400, the DNN for training 1240, the second DNN 600, the third DNN 1000 and the fourth DNN 1100 (S1610).

The training apparatus 1300 inputs, to the first DNN 400, the frequency domain training signal 1502 obtained from the first training signal 1501 via frequency transformation (1520) (S1620). The first DNN 400 outputs the frequency feature signal for training 1503 to the DNN for training 1540 (S1630), and the DNN for training 1540 outputs the reconstructed frequency domain training signal 1504 to the training apparatus 1300 (S1640).

The training apparatus 1300 compares the frequency domain training signal 1502 obtained via frequency transformation (1520) with the frequency domain training signal 1504 output from the DNN for training 1540, and thus, calculates the generation loss information 1560 (S1650). Then, the first DNN 400 and the DNN for training 1540 each update a parameter according to the generation loss information 1560 (S1660 and S1670).

The training apparatus 1300 inputs the frequency domain training signal 1502 obtained from the first training signal 1501 via frequency transformation (1520) back to the first DNN 400 (S1680). The first DNN 400 processes the frequency domain training signal 1502 via the updated parameter, and thus, outputs the frequency feature signal for training 1503 to the training apparatus 1300 (S1690). Compared to FIG. 13, the frequency feature signal for training 1503 is not embedded in the second training signal 1505, and thus, in FIG. 16, the frequency feature signal for training 1503 is not input to the second DNN 600.

Next, in FIG. 17, the training apparatus 1300 inputs the first training signal 1501 to the second DNN 600 (S1710), and the second DNN 600 outputs the second training signal 1505 to the training apparatus 1300 by processing the first training signal 1501 (S1720).

The training apparatus 1300 obtains the down loss information 1570 according to a result of comparison between the second training signal 1505 and a few-channel training signal legacy downscaled (1530) from the first training signal 1501 (S1730).

The training apparatus 1300 inputs the third training signal 1506 and the frequency feature signal for training 1507 obtained via first encoding and first decoding to the fourth DNN 1100 and the third DNN 1000, respectively, (S1740 and S1750). The fourth DNN 1100 outputs the intermediate audio signal for training 1509 by processing the third training signal 1506 (S1760), and the third DNN 1000 outputs the weight signal for training 1508 by processing the frequency feature signal for training 1507 (S1770).

The training apparatus 1300 obtains the fourth training signal 1510 by combining the intermediate audio signal for training 1509 with the weight signal for training 1508, and obtains the up loss information 1580 by comparing the first training signal 1501 with the fourth training signal 1510 (S1780).

The second DNN 600, the third DNN 1000 and the fourth DNN 1100 update parameters according to final loss information obtained by combining at least one of the down loss information 1570 and the up loss information 1580 (S1792, S1794, and S1796).

The training apparatus 1300 may repeat operations S1620 to S1796 until the parameters of the first DNN 400, the DNN for training 1540, the second DNN 600, the third DNN 1000 and the fourth DNN 1100 are optimized.

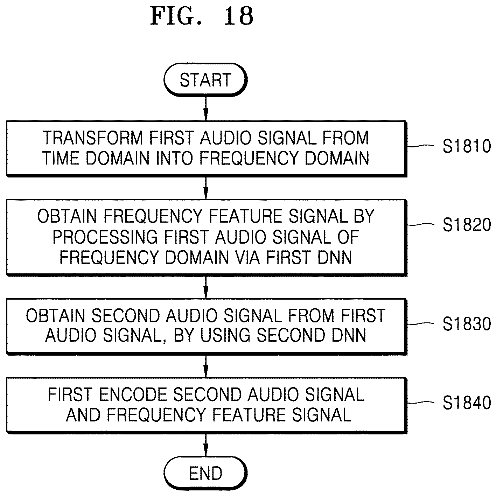

FIG. 18 illustrates a flowchart for describing an audio encoding method.

In S1810, the encoding apparatus 200 transforms the first audio signal 105 including n channels from a time domain into a frequency domain. As a result of the transformation, the first audio signal of the frequency domain may have n channels.

In S1820, the encoding apparatus 200 processes the first audio signal of the frequency domain via the first DNN 400, and thus, obtains a frequency feature signal whose number of samples per channel during a predetermined time period is smaller than the number of samples per channel of the first audio signal of the frequency domain.

In S1830, the encoding apparatus 200 obtains the second audio signal 115 including m channels (where, m<n) from the first audio signal 105, by using the second DNN 600. A time length of the second audio signal 115 may be equal to a time length of the first audio signal 105, and the number of channels of the second audio signal 115 may be smaller than the number of channels of the first audio signal 105.

In S1840, the encoding apparatus 200 obtains audio data by first encoding the second audio signal 115 and the frequency feature signal. As described above, the frequency feature signal may be embedded in the second audio signal 115 and then may be first encoded, or each of the second audio signal 115 and the frequency feature signal may be first encoded and then included in the audio data.

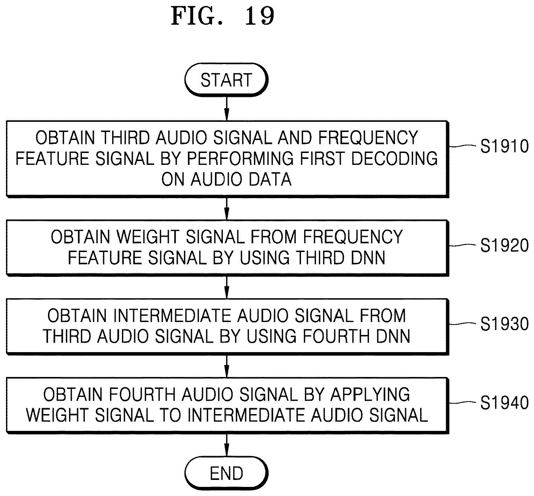

FIG. 19 illustrates a flowchart for describing an audio decoding method.

In S1910, the decoding apparatus 900 obtains the third audio signal 135 including m channels and a frequency feature signal by first decoding audio data. The frequency feature signal may be extracted during a processing procedure by the fourth DNN 1100 with respect to the third audio signal 135.

In operation S1920, the decoding apparatus 900 obtains a weight signal from the frequency feature signal by using the third DNN 1000. A time length and the number of channels of the weight signal may be equal to a time length and the number of channels of the first audio signal 105 and the fourth audio signal 145.

In S1930, the decoding apparatus 900 obtains an intermediate audio signal including n channels from the third audio signal 135 by using the fourth DNN 1100. A time length and the number of channels of the intermediate audio signal may be equal to a time length and the number of channels of the first audio signal 105 and the fourth audio signal 145.

In operation S1940, the decoding apparatus 900 obtains the fourth audio signal 145 including n channels, by applying a weight signal to the intermediate audio signal.

The fourth audio signal 145 may be output to a reproducing apparatus (e.g., speaker) to be reproduced.

The present techniques may be written as computer-executable programs that may be stored in a medium.

The medium may continuously store the computer-executable programs, or may temporarily store the computer-executable programs for execution or downloading. Also, the medium may be any one of various recording media or storage media in which a single piece or plurality of pieces of hardware are combined, and the medium is not limited to a medium directly connected to a computer system, but may be distributed over a network. Examples of the medium include magnetic media, such as a hard disk, a floppy disk, and a magnetic tape, optical recording media, such as CD-ROM and DVD, magneto-optical media such as a floptical disk, and a read-only memory (ROM), a random access memory (RAM), and a flash memory, which are configured to store program instructions. Other examples of the medium include recording media and storage media managed by application stores distributing applications or by websites, servers, and the like supplying or distributing other various types of software.

**Claims**

1. An audio signal processing apparatus (200) for audio encoding, the apparatus comprising:

   a memory storing one or more instructions; and
   a processor configured to execute the one or more instructions stored in the memory, wherein the processor is configured to:

   frequency transform a first audio signal (105) comprising n channels to generate a first audio signal of a frequency domain comprising a plurality of samples,
   generate a frequency feature signal (109) for each channel from the first audio signal of the frequency domain (107), using a first deep neural network, DNN, (400), the frequency feature signal representing a correlation, detected from the first audio signal of the frequency domain (107), between the n channels of the first audio signal (105) and having a smaller number of samples than the first audio signal of the frequency domain (107),
generate a second audio signal (115) comprising m channels from the first audio signal (105), using a second DNN (600), wherein m is less than n, and
generate an output audio signal by encoding the second audio signal (115) and the frequency feature signal, wherein the first audio signal (105) is a high order ambisonic signal comprising a zero$^{th}$ order signal and a plurality of first order signals, and
the second audio signal (115) comprises one of a mono signal and a stereo signal.

2. The audio signal processing apparatus (200) of claim 1, wherein

the frequency feature signal (109) comprises a representative value for each channel, and
the representative value for each channel is a value corresponding to a plurality of frequency bands for each channel of the first audio signal of the frequency domain (107).

3. The audio signal processing apparatus (200) of claim 1, wherein
the second DNN (600) obtains an audio feature signal (625) from the first audio signal (105), and outputs the second audio signal (115) from an integrated feature signal (628) in which the audio feature signal (625) and the frequency feature signal (109) are combined, and
the audio feature signal (625) corresponds to a feature signal obtained by processing the first audio signal (105) with layers of the second DNN (600).

4. The audio signal processing apparatus (200) of claim 3, wherein
the integrated feature signal (628) is obtained by replacing samples of some channels from among channels of the audio feature signal (625) with samples of the frequency feature signal (109).

5. The audio signal processing apparatus (200) of claim 4, wherein
the some channels comprise a predetermined number of consecutive channels starting from a first channel or a predetermined number of consecutive channels starting from a last channel from among the channels of the audio feature signal (625).

6. The audio signal processing apparatus (200) of claim 3, wherein
a time length of the audio feature signal (625) is equal to a time length of the frequency feature signal (109).

7. The audio signal processing apparatus (200) of claim 1, wherein
the number of samples of each channel during a predetermined time period is 1 in the frequency feature signal (109).

8. The audio signal processing apparatus (200) of claim 1, wherein

the output audio signal is represented as a bitstream, and
the frequency feature signal (109) is comprised in a supplemental region of the bitstream.

9. The audio signal processing apparatus (200) of claim 1, wherein

the first DNN (400) is trained using a result of comparing a frequency domain training signal (1204) transformed from a first training signal (1201) with a frequency domain training signal (1202) reconstructed from a frequency feature signal for training (1203) via a DNN for training (1240),
the first training signal (1201) corresponds to the first audio signal (105), and
the frequency feature signal for training (1203) is obtained from the frequency domain training signal (1202) using the first DNN (400).

10. The audio signal processing apparatus (200) of claim 9, wherein

the second DNN (600) is trained using at least one of a result of comparing a second training signal (1205) obtained from the first training signal (1201) via the second DNN (600) with a few-channel training signal downscaled from the first training signal (1201),
a result of comparing the first training signal (1201) with a fourth training signal (1210) reconstructed from audio data for training, and
a result of comparing the frequency feature signal (1203) for training with a frequency feature signal for training (1207) obtained from the audio data for training.

11. The audio signal processing apparatus (200) of claim 10, wherein
the first DNN (400) and the second DNN (600) are alternately trained.

12. An audio signal processing apparatus (900) for audio decoding, the apparatus comprising:

a memory storing one or more instructions; and
a processor configured to execute the one or more instructions stored in the memory, wherein the processor is configured to

generate a third audio signal (135) and a frequency feature signal (136) by decoding an input audio signal transmitted from an encoding apparatus (200), the third audio signal (135) comprising m channels corresponding to m channels of a second audio signal (115) and the frequency feature signal (136) representing a correlation, detected from a first audio signal of a frequency domain (107), between n channels of a first audio signal (105),
generate a weight signal (137) comprising n channels, where n>m, from the frequency feature signal (136), using a third deep neural network, DNN (1000), and
generate a fourth audio signal (145) comprising n channels by applying the weight signal (137) to an intermediate audio signal (138) comprising n channels generated from the third audio signal (135) via a fourth DNN (1100),
wherein the first audio signal (105), the first audio signal of the frequency domain (107) and the second audio signal (115) correspond to signals processed by the encoding apparatus (200),
the third audio signal (135) comprises one of a mono signal and a stereo signal, and
the fourth audio signal (145) is a high order ambisonic signal comprising a zeroth order signal and a plurality of first order signals.

13. The audio signal processing apparatus (900) of claim 12, wherein:

the fourth DNN (1100) obtains an integrated feature signal (1128) by processing the third audio signal (135), and outputs the intermediate audio signal (138) from an audio feature signal (1125) comprised in the integrated feature signal (1128),
the audio feature signal (1125) corresponds to a feature signal obtained by processing the third audio signal (135) with layers of the fourth DNN (1100), and
the frequency feature signal (136) is extracted from the integrated feature signal (1128) and then is input to the third DNN (1000).

14. The audio signal processing apparatus (900) of claim 12, wherein
the processor is configured to obtain the fourth audio signal (145) by multiplying samples of the intermediate audio signal (138) by samples of the weight signal (137).

## Patentansprüche

1. Audiosignalverarbeitungsvorrichtung (200) zum Audiocodieren, wobei die Vorrichtung Folgendes umfasst:

einen Speicher, der eine oder mehrere Anweisungen speichert; und
einen Prozessor, der dazu konfiguriert ist, die eine oder mehreren Anweisungen, die in dem Speicher gespeichert sind, auszuführen, wobei der Prozessor zu Folgendem konfiguriert ist:

Frequenztransformieren eines ersten Audiosignals (105), das n Kanäle umfasst, um ein erstes Audiosignal eines Frequenzbereichs zu erzeugen, der eine Vielzahl von Proben umfasst,
Erzeugen eines Frequenzmerkmalsignals (109) für jeden Kanal aus dem ersten Audiosignal des Frequenzbereichs (107) unter Verwendung eines ersten tiefen neuronalen Netzwerks, DNN, (400), wobei das Frequenzmerkmalsignal eine Korrelation, detektiert aus dem ersten Audiosignal des Frequenzbereichs (107), zwischen den n Kanälen des ersten Audiosignals (105) darstellt und eine kleinere Anzahl an Proben als das erste Audiosignal des Frequenzbereichs (107) aufweist,
Erzeugen eines zweiten Audiosignals (115), das m Kanäle umfasst, aus dem ersten Audiosignal (105) unter Verwendung eines zweiten DNN (600), wobei m weniger als n ist, und

Erzeugen eines Ausgangsaudiosignals durch Codieren des zweiten Audiosignals (115) und des Frequenzmerkmalsignals,

wobei das erste Audiosignal (105) ein ambisonisches Signal hoher Ordnung ist, das ein Signal nullter Ordnung und eine Vielzahl von Signalen erster Ordnung umfasst, und

das zweite Audiosignal (115) eines von einem Monosignal und einem Stereosignal umfasst.

2. Audiosignalverarbeitungsvorrichtung (200) nach Anspruch 1, wobei

das Frequenzmerkmalsignal (109) einen repräsentativen Wert für jeden Kanal umfasst, und
der repräsentative Wert für jeden Kanal ein Wert entsprechend einer Vielzahl von Frequenzbändern für jeden Kanal des ersten Audiosignals des Frequenzbereichs (107) ist.

3. Audiosignalverarbeitungsvorrichtung (200) nach Anspruch 1, wobei

das zweite DNN (600) ein Audiomerkmalsignal (625) aus dem ersten Audiosignal (105) erhält und das zweite Audiosignal (115) aus einem integrierten Merkmalsignal (628) ausgibt, in dem das Audiomerkmalsignal (625) und das Frequenzmerkmalsignal (109) kombiniert sind, und

das Audiomerkmalsignal (625) einem Merkmalsignal entspricht, das durch Verarbeiten des ersten Audiosignals (105) mit Schichten des zweiten DNN (600) erhalten wird.

4. Audiosignalverarbeitungsvorrichtung (200) nach Anspruch 3, wobei
das integrierte Merkmalssignal (628) erhalten wird, indem Proben von einigen Kanälen aus Kanälen des Audiomerkmalsignals (625) durch Proben des Frequenzmerkmalsignals (109) ersetzt werden.

5. Audiosignalverarbeitungsvorrichtung (200) nach Anspruch 4, wobei
die einigen Kanäle eine vorbestimmte Anzahl an aufeinanderfolgenden Kanälen ausgehend von einem ersten Kanal oder eine vorbestimmte Anzahl an aufeinanderfolgenden Kanälen ausgehend von einem letzten Kanal aus den Kanälen des Audiomerkmalsignals (625) umfassen.

6. Audiosignalverarbeitungsvorrichtung (200) nach Anspruch 3, wobei
eine Zeitlänge des Audiomerkmalsignals (625) gleich einer Zeitlänge des Frequenzmerkmalsignals (109) ist.

7. Audiosignalverarbeitungsvorrichtung (200) nach Anspruch 1, wobei
die Anzahl an Proben jedes Kanals während eines vorbestimmten Zeitraums 1 in dem Frequenzmerkmalsignal (109) ist.

8. Audiosignalverarbeitungsvorrichtung (200) nach Anspruch 1, wobei

das Ausgangsaudiosignal als Bitstrom dargestellt ist, und
das Frequenzmerkmalsignal (109) in einer zusätzlichen Region des Bitstroms umfasst ist.

9. Audiosignalverarbeitungsvorrichtung (200) nach Anspruch 1, wobei

das erste DNN (400) unter Verwendung eines Ergebnisses des Vergleichens eines Frequenzbereichstrainingssignals (1204) transformiert aus einem ersten Trainingssignal (1201) mit einem Frequenzbereichstrainingssignal (1202) rekonstruiert aus einem Frequenzmerkmalsignal zum Training (1203) über ein DNN zum Training (1240) trainiert wird,

das erste Trainingssignal (1201) dem ersten Audiosignal (105) entspricht, und

das Frequenzmerkmalsignal zum Training (1203) aus dem Frequenzbereichstrainingssignal (1202) unter Verwendung des ersten DNN (400) erhalten wird.

10. Audiosignalverarbeitungsvorrichtung (200) nach Anspruch 9, wobei

das zweite DNN (600) unter Verwendung von zumindest einem von einem Ergebnis des Vergleichens eines zweiten Trainingssignals (1205), das aus dem ersten Trainingssignal (1201) über das zweite DNN (600) erhalten wird, mit einem Trainingssignal mit wenigen Kanälen, das von dem ersten Trainingssignal (1201) herunterskaliert ist,

einem Ergebnis des Vergleichens des ersten Trainingssignals (1201) mit einem vierten Trainingssignal (1210), das aus Audiodaten zum Training rekonstruiert ist, und

einem Ergebnis des Vergleichens des Frequenzmerkmalsignals (1203) zum Training mit einem Frequenzmerkmalsignal zum Training (1207), das aus den Audiodaten zum Training erhalten wird, trainiert wird.

11. Audiosignalverarbeitungsvorrichtung (200) nach Anspruch 10, wobei das erste DNN (400) und das zweite DNN (600) abwechselnd trainiert werden.

12. Audiosignalverarbeitungsvorrichtung (900) zum Audiodecodieren, wobei die Vorrichtung Folgendes umfasst:

einen Speicher, der eine oder mehrere Anweisungen speichert; und
einen Prozessor, der dazu konfiguriert ist, die eine oder mehreren Anweisungen, die in dem Speicher gespeichert sind, auszuführen, wobei der Prozessor zu Folgendem konfiguriert ist:

Erzeugen eines dritten Audiosignals (135) und eines Frequenzmerkmalsignals (136) durch Decodieren eines Eingangsaudiosignals, das von einer Codiervorrichtung (200) übertragen wird, wobei das dritte Audiosignal (135) m Kanäle umfasst, die m Kanälen eines zweiten Audiosignals (115) entsprechen, und das Frequenzmerkmalsignal (136) eine Korrelation, detektiert aus einem ersten Audiosignal eines Frequenzbereichs (107), zwischen n Kanälen eines ersten Audiosignals (105) darstellt,
Erzeugen eines Gewichtssignal (137), das n Kanäle umfasst, wobei n>m, aus dem Frequenzmerkmalsignal (136) unter Verwendung eines dritten tiefen neuronalen Netzes, DNN (1000), und
Erzeugen eines vierten Audiosignals (145), das n Kanäle umfasst, durch Anlegen des Gewichtssignals (137) an ein Zwischenaudiosignal (138), das n Kanäle umfasst, die aus dem dritten Audiosignal (135) über ein viertes DNN (1100) erzeugt werden,
wobei das erste Audiosignal (105), das erste Audiosignal des Frequenzbereichs (107) und das zweite Audiosignal (115) Signalen entsprechen, die durch die Codiervorrichtung (200) verarbeitet werden,
das dritte Audiosignal (135) eines von einem Monosignal und einem Stereosignal umfasst, und
das vierte Audiosignal (145) ein ambisonisches Signal hoher Ordnung ist, das ein Signal nullter Ordnung und eine Vielzahl von Signalen erster Ordnung umfasst.

13. Audiosignalverarbeitungsvorrichtung (900) nach Anspruch 12, wobei:

das vierte DNN (1100) ein integriertes Merkmalssignal (1128) durch Verarbeiten des dritten Audiosignals (135) erhält und das Zwischenaudiosignal (138) aus einem Audiomerkmalsignal (1125) ausgibt, das in dem integrierten Merkmalssignal (1128) umfasst ist,
das Audiomerkmalsignal (1125) einem Merkmalsignal entspricht, das durch Verarbeiten des dritten Audiosignals (135) mit Schichten des vierten DNN (1100) erhalten wird, und
das Frequenzmerkmalsignal (136) aus dem integrierten Merkmalsignal (1128) extrahiert wird und dann in das dritte DNN (1000) eingegeben wird.

14. Audiosignalverarbeitungsvorrichtung (900) nach Anspruch 12, wobei
der Prozessor dazu konfiguriert ist, das vierte Audiosignal (145) durch Multiplizieren von Proben des Zwischenaudiosignals (138) mit Proben des Gewichtssignals (137) zu erhalten.

**Revendications**

1. Appareil de traitement de signal audio (200) pour le codage audio, l'appareil comprenant :

une mémoire stockant une ou plusieurs instructions ; et
un processeur configuré pour exécuter les une ou plusieurs instructions stockées dans la mémoire, dans lequel le processeur est configuré pour :

transformer en fréquence un premier signal audio (105) comprenant n canaux pour générer un premier signal audio d'un domaine de fréquence comprenant une pluralité d'échantillons,
générer un signal de caractéristique de fréquence (109) pour chaque canal à partir du premier signal audio du domaine de fréquence (107), en utilisant un premier réseau neuronal profond, DNN, (400), le signal de caractéristique de fréquence représentant une corrélation, détectée à partir du premier signal audio du domaine de fréquence (107), entre les n canaux du premier signal audio (105) et présentant un nombre d'échantillons inférieur au premier signal audio du domaine de fréquence (107),
générer un deuxième signal audio (115) comprenant m canaux à partir du premier signal audio (105), en utilisant un deuxième DNN (600), dans lequel m est inférieur à n, et
générer un signal audio de sortie en codant le deuxième signal audio (115) et le signal de caractéristique de fréquence,
dans lequel le premier signal audio (105) est un signal ambisonique d'ordre élevé comprenant un signal du zéro$^e$ ordre et une pluralité de signaux du premier ordre, et
le deuxième signal audio (115) comprend l'un d'un signal mono et d'un signal stéréo.

2. Appareil de traitement de signal audio (200) de la revendication 1, dans lequel

le signal de caractéristique de fréquence (109) comprend une valeur représentative pour chaque canal, et
la valeur représentative pour chaque canal est une valeur correspondant à une pluralité de bandes de fréquences pour chaque canal du premier signal audio du domaine de fréquence (107).

3. Appareil de traitement de signal audio (200) de la revendication 1, dans lequel
le deuxième DNN (600) obtient un signal de caractéristique audio (625) à partir du premier signal audio (105), et émet en sortie le deuxième signal audio (115) à partir d'un signal de caractéristique intégré (628) où le signal de caractéristique audio (625) et le signal de caractéristique de fréquence (109) sont combinés, et le signal de caractéristique audio (625) correspond à un signal de caractéristique obtenu en traitant le premier signal audio (105) avec des couches du deuxième DNN (600).

4. Appareil de traitement de signal audio (200) de la revendication 3, dans lequel
le signal de caractéristique intégré (628) est obtenu en remplaçant des échantillons de certains canaux parmi les canaux du signal de caractéristique audio (625) par des échantillons du signal de caractéristique de fréquence (109).

5. Appareil de traitement de signal audio (200) de la revendication 4, dans lequel
les certains canaux comprennent un nombre prédéfini de canaux consécutifs à partir d'un premier canal ou un nombre prédéfini de canaux consécutifs à partir d'un dernier canal parmi les canaux du signal de caractéristique audio (625).

6. Appareil de traitement de signal audio (200) de la revendication 3, dans lequel
une durée du signal de caractéristique audio (625) est égale à une durée du signal de caractéristique de fréquence (109).

7. Appareil de traitement de signal audio (200) de la revendication 1, dans lequel
le nombre d'échantillons de chaque canal pendant une période temporelle prédéterminée est de 1 dans le signal de caractéristique de fréquence (109).

8. Appareil de traitement de signal audio (200) de la revendication 1, dans lequel

le signal audio de sortie est représenté comme un train de bits, et
le signal de caractéristique de fréquence (109) est compris dans une région supplémentaire du train de bits.

9. Appareil de traitement de signal audio (200) de la revendication 1, dans lequel

le premier DNN (400) est entraîné en utilisant un résultat de comparaison d'un signal d'entraînement dans le domaine de fréquence (1204) transformé à partir d'un premier signal d'entraînement (1201) avec un signal d'entraînement dans le domaine de fréquence (1202) reconstruit à partir d'un signal de caractéristique de fréquence pour l'entraînement (1203) par l'intermédiaire d'un DNN pour l'entraînement (1240),
le premier signal d'entraînement (1201) correspond au premier signal audio (105), et
le signal de caractéristique de fréquence pour l'entraînement (1203) est obtenu à partir du signal d'entraînement dans le domaine de fréquence (1202) en utilisant le premier DNN (400).

10. Appareil de traitement de signal audio (200) de la revendication 9, dans lequel

le deuxième DNN (600) est entraîné en utilisant au moins l'un d'un résultat de comparaison d'un deuxième signal d'entraînement (1205) obtenu à partir du premier signal d'entraînement (1201) par l'intermédiaire du deuxième DNN (600) avec un signal d'entraînement à quelques canaux réduit à partir du premier signal d'entraînement (1201),

un résultat de comparaison du premier signal d'entraînement (1201) avec un quatrième signal d'entraînement (1210) reconstruit à partir de données audio pour l'entraînement, et

un résultat de comparaison du signal de caractéristique de fréquence (1203) pour l'entraînement avec un signal de caractéristique de fréquence pour l'entraînement (1207) obtenu à partir des données audio pour l'entraînement.

11. Appareil de traitement de signal audio (200) de la revendication 10, dans lequel le premier DNN (400) et le deuxième DNN (600) sont entraînés alternativement.

12. Appareil de traitement de signal audio (900) pour le décodage audio, l'appareil comprenant :

une mémoire stockant une ou plusieurs instructions ; et

un processeur configuré pour exécuter les une ou plusieurs instructions stockées dans la mémoire, dans lequel le processeur est configuré pour

générer un troisième signal audio (135) et un signal de caractéristique de fréquence (136) en décodant un signal audio d'entrée transmis à partir d'un appareil de codage (200), le troisième signal audio (135) comprenant m canaux correspondant à m canaux d'un deuxième signal audio (115) et le signal de caractéristique de fréquence (136) représentant une corrélation, détectée à partir d'un premier signal audio d'un domaine de fréquence (107), entre n canaux d'un premier signal audio (105),

générer un signal de pondération (137) comprenant n canaux, où n>m, à partir du signal de caractéristique de fréquence (136), en utilisant un troisième réseau neuronal profond, DNN (1000), et

générer un quatrième signal audio (145) comprenant n canaux en appliquant le signal de pondération (137) à un signal audio intermédiaire (138) comprenant n canaux généré à partir du troisième signal audio (135) par l'intermédiaire d'un quatrième DNN (1100),

dans lequel le premier signal audio (105), le premier signal audio du domaine de fréquence (107) et le deuxième signal audio (115) correspondent à des signaux traités par l'appareil de codage (200),

le troisième signal audio (135) comprend l'un d'un signal mono et d'un signal stéréo, et

le quatrième signal audio (145) est un signal ambisonique d'ordre élevé comprenant un signal du zéro$^e$ ordre et une pluralité de signaux du premier ordre.

13. Appareil de traitement de signal audio (900) de la revendication 12, dans lequel :

le quatrième DNN (1100) obtient un signal de caractéristique intégré (1128) en traitant le troisième signal audio (135), et émet en sortie le signal audio intermédiaire (138) à partir d'un signal de caractéristique audio (1125) compris dans le signal de caractéristique intégré (1128),

le signal de caractéristique audio (1125) correspond à un signal de caractéristique obtenu en traitant le troisième signal audio (135) avec des couches du quatrième DNN (1100), et

le signal de caractéristique de fréquence (136) est extrait du signal de caractéristique intégré (1128) puis est entré dans le troisième DNN (1000).

14. Appareil de traitement de signal audio (900) de la revendication 12, dans lequel

le processeur est configuré pour obtenir le quatrième signal audio (145) en multipliant des échantillons du signal audio intermédiaire (138) par des échantillons du signal de pondération (137).

EP 4 202 921 B1

## FIG. 1

# FIG. 2

# FIG. 3

# FIG. 4

EP 4 202 921 B1

# FIG. 5

|  | FIRST FRAME |  | p$^{th}$ FRAME |  |
|---|---|---|---|---|
| FIRST FREQUENCY BIN | 0.4 | ⋯ | 0.8 | 107 |
| SECOND FREQUENCY BIN | 0.2 | ⋯ | 0.9 |  |
| ⋮ | 0.6 | ⋯ | 0.3 | FOURTH CHANNEL |
| k$^{th}$ FREQUENCY BIN | 0.7 | ⋯ | 0.2 |  |
| FIRST FREQUENCY BIN | 0 | ⋯ | 0.9 |  |
| SECOND FREQUENCY BIN | 0 | ⋯ | 0.6 |  |
| ⋮ | 0 | ⋯ | 0.7 | THIRD CHANNEL |
| k$^{th}$ FREQUENCY BIN | 0 | ⋯ | 0.01 |  |
| FIRST FREQUENCY BIN | 0.3 | ⋯ | 0.6 |  |
| SECOND FREQUENCY BIN | 0 | ⋯ | 0.5 |  |
| ⋮ | 0 | ⋯ | 0.8 | SECOND CHANNEL |
| k$^{th}$ FREQUENCY BIN | 0.3 | ⋯ | 0.5 |  |
| FIRST FREQUENCY BIN | 0.5 | ⋯ | 0 |  |
| SECOND FREQUENCY BIN | 0.6 | ⋯ | 0 |  |
| ⋮ | 0.1 | ⋯ | 0.5 | FIRST CHANNEL |
| k$^{th}$ FREQUENCY BIN | 0.2 | ⋯ | 0.4 |  |

⇒

| FIRST FRAME | ⋯ | q$^{th}$ FRAME |  |
|---|---|---|---|
| 0.5 | ⋯ | 1.0 | FOURTH CHANNEL |
| 0 | ⋯ | 1.0 | THIRD CHANNEL |
| 0.2 | ⋯ | 1.0 | SECOND CHANNEL |
| 0.5 | ⋯ | 0.7 | FIRST CHANNEL |

109

# FIG. 6

EP 4 202 921 B1

FIG. 7

# FIG. 8

## FIG. 9

EP 4 202 921 B1

EP 4 202 921 B1

# FIG. 10

FIG. 11

1100

138

TIME

CHANNEL

(16384, 4)

1140 Reshape

1135

(256, c)

1130 Conv 33xc

136

(128, 4)

1128

136

1125

1120 Conv 33xb

(128, b)

1110 Conv 33xa

1115

(4096, a)

135

TIME

CHANNEL

(16384, 2)

**FIG. 12**

GENERATION LOSS INFORMATION

1260

COMPARE

1204

FREQUENCY
DOMAIN
TRAINING SIGNAL

1240

DNN FOR
TRAINING

1203

FREQUENCY
FEATURE SIGNAL
FOR TRAINING

1290

MATCHING LOSS
INFORMATION

COMPARE

1220

FREQUENCY
TRANSFORMATION

1202

FREQUENCY
DOMAIN
TRAINING SIGNAL

400

FIRST DNN

1201

FIRST
TRAINING
SIGNAL

1203

600

FREQUENCY FEATURE
SIGNAL FOR TRAINING

SECOND DNN

LEGACY
DOWNSCALE

SECOND
TRAINING SIGNAL

1205

FIRST ENCODING/
DECODING

1250

THIRD TRAINING
SIGNAL

1206

1000

THIRD DNN

1100

FOURTH DNN

1207

FREQUENCY
FEATURE SIGNAL
FOR TRAINING

1208

WEIGHT SIGNAL
FOR TRAINING

1210

FOURTH
TRAINING
SIGNAL

INTERMEDIATE
AUDIO SIGNAL
FOR TRAINING

1209

1230

COMPARE

1270

DOWN LOSS INFORMATION

COMPARE

1280

UP LOSS INFORMATION

EP 4 202 921 B1

34

# FIG. 13

**TRAINING APPARATUS** (1300), **FIRST DNN** (400), **DNN FOR TRAINING** (1240), **SECOND DNN** (600), **THIRD DNN** (1000), **FOURTH DNN** (1100)

- INITIALLY SET PARAMETER — S1310
- INPUT FREQUENCY DOMAIN TRAINING SIGNAL — S1320
- OUTPUT FREQUENCY FEATURE SIGNAL FOR TRAINING — S1330
- S1340 OUTPUT FREQUENCY DOMAIN TRAINING SIGNAL
- CALCULATE GENERATION LOSS INFORMATION — S1350
- GENERATION LOSS INFORMATION / UPDATE PARAMETER — S1360
- GENERATION LOSS INFORMATION / UPDATE PARAMETER — S1370
- INPUT FREQUENCY DOMAIN TRAINING SIGNAL — S1380
- OUTPUT FREQUENCY FEATURE SIGNAL FOR TRAINING — S1390

# FIG. 14

EP 4 202 921 B1

**FIG. 15**

# FIG. 16

EP 4 202 921 B1

# FIG. 17

INPUT FIRST TRAINING SIGNAL — S1710

OUTPUT SECOND TRAINING SIGNAL — S1720

CALCULATE DOWN LOSS INFORMATION — S1730

INPUT THIRD TRAINING SIGNAL — S1740

INPUT FREQUENCY FEATURE SIGNAL FOR TRAINING — S1750

S1760 — OUTPUT INTERMEDIATE AUDIO SIGNAL FOR TRAINING

OUTPUT WEIGHT SIGNAL FOR TRAINING — S1770

S1780 CALCULATE UP LOSS INFORMATION

S1792 UPDATE PARAMETER

FINAL LOSS INFORMATION

S1794 UPDATE PARAMETER

FINAL LOSS INFORMATION

S1796 UPDATE PARAMETER

FINAL LOSS INFORMATION

1300 TRAINING APPARATUS

400 FIRST DNN

1540 DNN FOR TRAINING

600 SECOND DNN

1000 THIRD DNN

1100 FOURTH DNN

EP 4 202 921 B1

# FIG. 18

START

TRANSFORM FIRST AUDIO SIGNAL FROM TIME DOMAIN INTO FREQUENCY DOMAIN — S1810

OBTAIN FREQUENCY FEATURE SIGNAL BY PROCESSING FIRST AUDIO SIGNAL OF FREQUENCY DOMAIN VIA FIRST DNN — S1820

OBTAIN SECOND AUDIO SIGNAL FROM FIRST AUDIO SIGNAL, BY USING SECOND DNN — S1830

FIRST ENCODE SECOND AUDIO SIGNAL AND FREQUENCY FEATURE SIGNAL — S1840

END

# FIG. 19

START

OBTAIN THIRD AUDIO SIGNAL AND FREQUENCY FEATURE SIGNAL BY PERFORMING FIRST DECODING ON AUDIO DATA — S1910

OBTAIN WEIGHT SIGNAL FROM FREQUENCY FEATURE SIGNAL BY USING THIRD DNN — S1920

OBTAIN INTERMEDIATE AUDIO SIGNAL FROM THIRD AUDIO SIGNAL BY USING FOURTH DNN — S1930

OBTAIN FOURTH AUDIO SIGNAL BY APPLYING WEIGHT SIGNAL TO INTERMEDIATE AUDIO SIGNAL — S1940

END

**EP 4 202 921 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8041041 B
- US 2020221242 A